# EUROPEAN PATENT APPLICATION

(11) **EP 3 190 804 A1**
(43) Date of publication of application: **12.07.2017**
(21) Application number: 14903162.7
(22) Date of filing: 04.11.2014
(51) Int. Cl.: H04Q 11/00

(54) **COMMUNICATION METHOD, DEVICE, AND SYSTEM FOR WAVELENGTH DIVISION MULTIPLEXING PASSIVE OPTICAL NETWORK**

(30) Priority: 29.09.2014 WO PCT/CN2014/087781
(71) Applicant: Huawei Technologies Co., Ltd., Longgang District Shenzhen, Guangdong 518129 (CN)
(72) Inventor: XU, Zhiguang, Shenzhen Guangdong 518129 (CN); ZHENG, Gang, Shenzhen Guangdong 518129 (CN); WANG, Zhenping, Shenzhen Guangdong 518129 (CN); EFFENBERGER, Frank J., Shenzhen Guangdong 518129 (CN)
(74) Representative: Pfenning, Meinig & Partner mbB
(86) International application number: PCT/CN2014/090196
(87) International publication number: WO 2016/049964

(57) **Abstract**

Embodiments of the present invention provide a wavelength division multiplexing passive optical network communications method and apparatus, and a system. The method includes: receiving, by an optical line terminal OLT, service data; obtaining, by the OLT, management data; and sending, by the OLT, a first frame to an optical network unit ONU, where a 32-bit/34-bit encoding manner is used for the first frame. The first frame includes a header field and a payload field, where the header field includes a management data field and an option field, the management data field includes at least one part of multiple fragments of the management data, and the option field includes information for indicating whether fragmentation ends. In the embodiments of the present invention, the at least one part of the management data and the service data are encapsulated in a 32-bit/34-bit encoding manner, and a management channel is established between the OLT and the ONU, so as to implement communication between the OLT and the ONU.

## Description

### TECHNICAL FIELD

Embodiments of the present invention relate to communications technologies, and in particular, to a wavelength division multiplexing passive optical network communications method and apparatus, and a system.

### BACKGROUND

With a continuous increase in user requirements for bandwidth, currently, fiber access is a mainstream of an access network, and a passive optical network (Passive Optical Network, PON for short) is especially competitive, a wavelength division multiplexing (Wavelength Division Multiplexing, WDM for short) PON attracts much attention because the wavelength division multiplexing PON has advantages such as a relatively large bandwidth capacity and a quasi-peer-to-peer communication manner for ensuring information security.

The WDM PON is used as a reliable system, and a central office needs to manage and control a terminal. Currently, WDM PON solutions mostly focus on a physical layer, and a solution to establishing a management channel between an optical line terminal (Optical Line Terminal, OLT for short) and an optical network unit (Optical Network Unit, ONU for short), so as to manage the ONU by the OLT is not provided.

### SUMMARY

Embodiments of the present invention provide a wavelength division multiplexing passive optical network communications method and apparatus, and a system, so as to establish a management channel between an OLT and an ONU and manage the ONU by the OLT.

According to a first aspect, an embodiment of the present invention provides a wavelength division multiplexing passive optical network WDM-PON communication method, including: receiving, by an optical line terminal OLT, service data; obtaining, by the OLT, management data, where the management data includes multiple fragments; and sending, by the OLT, a first frame to an optical network unit ONU, where a 32-bit/34-bit encoding manner is used for the first frame, the first frame includes a header field and a payload field, and the service data is carried on the payload field of the first frame, where the header field includes a management data field, including at least one part of the multiple fragments of the management data; and an option field, including information for indicating whether fragmentation ends.

According to the first aspect, in a first possible implementation manner of the first aspect, before the sending, by the OLT, a first frame to an ONU, the method further includes: checking the at least one part of the multiple fragments; and the header field further includes a check field, including check data of the at least one part of the multiple fragments.

According to the first aspect, in a second possible implementation manner of the first aspect, before the management data is divided into the multiple fragments, the method further includes: checking the management data, where the first frame further includes a second check field, and the second check field includes check data generated by checking the management data that is before the fragmentation.

According to the first aspect or any possible implementation manner of the first aspect, in a third possible implementation manner of the first aspect, the service data is encoded by means of a Reed-Solomon code RS (250, 218).

According to the first aspect or any possible implementation manner of the first aspect, in a fourth possible implementation manner of the first aspect, the service data is encoded by means of a Reed-Solomon code RS (254, 238).

According to the first aspect, in a fifth possible implementation manner of the first aspect, the management data and the service data are encoded by means of a Reed-Solomon code RS (253, 221).

According to the first aspect or any possible implementation manner of the first aspect, in a sixth possible implementation manner of the first aspect, after the sending, by the OLT, a first frame to an ONU, the method further includes: sending, by the OLT, a second frame to the ONU, where a header field of the second frame includes a remaining part of the fragmented management data.

According to the first aspect or any possible implementation manner of the first aspect, in a seventh possible implementation manner of the first aspect, the first frame is an ONU management and control interface OMCI Ethernet frame.

According to a second aspect, an embodiment of the present invention provides a wavelength division multiplexing passive optical network WDM-PON communication method, including: receiving, by an optical network unit ONU, a first frame sent by an optical line terminal OLT, where a 32-bit/34-bit encoding manner is used for the first frame, the first frame includes first management data and service data, the service data is carried on a payload field of the first frame, and a header field of the first frame includes a management data field, including multiple fragments of the first management data; and an option field, including information for indicating whether fragmentation ends; and reading, by the ONU, the multiple fragments of the first management data from the header field, to obtain the first management data.

According to the second aspect, in a first possible implementation manner of the second aspect, the header field further includes a check field, including check data of the multiple fragments of the first management data.

According to the second aspect or the first possible implementation manner of the second aspect, in a second possible implementation manner of the second aspect, the service data of the first frame is encoded by means of a Reed-Solomon code RS (250, 218).

According to the second aspect or the first possible implementation manner of the second aspect, in a third possible implementation manner of the second aspect, the service data is encoded by means of a Reed-Solomon code RS (254, 238).

According to the second aspect, in a fourth possible implementation manner of the second aspect, the management data and the service data are encoded by means of a Reed-Solomon code RS (253, 221).

According to the second aspect or any possible implementation manner of the second aspect, in a fifth possible implementation manner of the second aspect, after the receiving, by an ONU, a first frame sent by an OLT, the method further includes: determining, according to the information in the option field for indicating whether the fragmentation ends, that the fragmentation does not end; receiving, by the ONU, a second frame sent by the OLT, where a header field of the second frame includes second management data; obtaining the second management data and combining the first management data and the second management data; and performing corresponding configuration according to the combined first management data and second management data.

According to the second aspect or any possible implementation manner of the second aspect, in a sixth possible implementation manner of the second aspect, after the reading, by the ONU, the management data field from the header field, to obtain the first management data, the method further includes: performing corresponding configuration according to the first management data.

According to the second aspect or any possible implementation manner of the second aspect, in a seventh possible implementation manner of the second aspect, the first frame is an ONU management and control interface OMCI Ethernet frame.

According to a third aspect, an embodiment of the present invention provides a wavelength division multiplexing passive optical network WDM-PON communications apparatus, including: a receiving module, configured to receive service data; an obtaining module, configured to obtain management data, where the management data includes multiple fragments; and a sending module, configured to send a first frame to an optical network unit ONU, where a 32-bit/34-bit encoding manner is used for the first frame, the first frame includes a header field and a payload field, and the service data is carried on the payload field of the first frame, where the header field includes a management data field, including at least one part of the multiple fragments of the management data; and an option field, including information for indicating whether fragmentation ends.

According to the third aspect, in a first possible implementation manner of the third aspect, the apparatus further includes a check module, configured to check the at least one part of the multiple fragments; and the header field further includes a check field, including check data of the at least one part of the multiple fragments.

According to the third aspect, in a second possible implementation manner of the third aspect, the apparatus further includes a second check module, configured to check the management data that is before the fragmentation, where the first frame further includes a second check field, including check data of the management data that is before the fragmentation.

According to the third aspect or any possible implementation manner of the third aspect, in a third possible implementation manner of the third aspect, the service data of the first frame is encoded by means of a Reed-Solomon code RS (250, 218).

According to the third aspect or any possible implementation manner of the third aspect, in a fourth possible implementation manner of the third aspect, the service data of the first frame is encoded by means of a Reed-Solomon code RS (254, 238).

According to the third aspect, in a fifth possible implementation manner of the third aspect, the management data and the service data are encoded by means of a Reed-Solomon code RS (253, 221).

According to the third aspect or any possible implementation manner of the third aspect, in a sixth possible implementation manner of the third aspect, the sending module is further configured to send a second frame to the ONU, where a header field of the second frame includes a remaining part of the fragmented management data.

According to the third aspect or any possible implementation manner of the third aspect, in a seventh possible implementation manner of the third aspect, the first frame is an ONU management and control interface OMCI Ethernet frame.

According to a fourth aspect, an embodiment of the present invention provides a wavelength division multiplexing passive optical network WDM-PON communications apparatus, including: a receiving module, configured to receive a first frame sent by an optical line terminal OLT, where a 32-bit/34-bit encoding manner is used for the first frame, the first frame includes first management data and service data, the service data is carried on a payload field of the first frame, and a header field of the first frame includes a management data field, including at least one part of the first management data after fragmentation, and an option field, including information for indicating whether fragmentation ends; and a configuration module, configured to read the management data field from the header field, to obtain the first management data.

According to the fourth aspect, in a first possible implementation manner of the fourth aspect, the header field further includes a check field, including check data of multiple fragments of the first management data.

According to the fourth aspect or the first possible implementation manner of the fourth aspect, in a second possible implementation manner of the fourth aspect, the service data of the first frame is encoded by means of a Reed-Solomon code RS (250, 218).

According to the fourth aspect or the first possible implementation manner of the fourth aspect, in a third possible implementation manner of the fourth aspect, the service data of the first frame is encoded by means of a Reed-Solomon code RS (254, 238).

According to the fourth aspect, in a fourth possible implementation manner of the fourth aspect, the management data and the service data are encoded by means of a Reed-Solomon code RS (253, 221).

According to the fourth aspect or any possible implementation manner of the fourth aspect, in a fifth possible implementation manner of the fourth aspect, the receiving module is further configured to receive a second frame sent by the OLT, where a header field of the second frame carries second management data; and the configuration module obtains the second management data, combines the first management data and the second management data, and performs corresponding configuration according to the combined first management data and second management data.

According to the fourth aspect or any possible implementation manner of the fourth aspect, in a sixth possible implementation manner of the fourth aspect, the configuration module is specifically configured to perform corresponding configuration according to the first management data.

According to the fourth aspect or any possible implementation manner of the fourth aspect, in a seventh possible implementation manner, the first frame is an ONU management and control interface OMCI Ethernet frame.

According to a fifth aspect, an embodiment of the present invention provides a passive optical network system, including an optical line terminal OLT and an optical network unit ONU, where the OLT includes the apparatus according to any one of the third aspect and the ONU includes the apparatus according to any one of the fourth aspect.

In the foregoing manners of all the aspects in the embodiments of the present invention, management data is carried on a header field of a frame and is sent to an ONU end, so as to establish a management channel between an OLT and the ONU, implement communication between the OLT and the ONU, thereby resolving a problem that a solution to establishing the management channel is not provided for a current WDM-PON.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a network structure diagram of a PON;
FIG. 2 is a network structure diagram of a WDM-PON;
FIG. 3 is a schematic diagram of converting 8B10B encoding into 32B34B encoding;
FIG. 4 is a schematic diagram of an encoding rule of 32-bit to 34-bit;
FIG. 5 is a schematic diagram of specific encoding of 32-bit to 34-bit;
FIG. 6 is a schematic diagram of a control character block conversion table;
FIG. 7 is a schematic flowchart of Embodiment 1 of a WDM-PON communication method according to the present invention;
FIG. 8 is a schematic structural diagram of an OMCI Ethernet frame;
FIG. 9 is a schematic diagram of an out-of-band management model of a WDM-PON communication method according to the present invention;
FIG. 10 is a schematic diagram of 32B34B encoding of a WDM-PON communication method according to the present invention;
FIG. 11A is a schematic diagram of another 32B34B encoding of a WDM-PON communication method according to the present invention;
FIG. 11B is a schematic diagram of another 32B34B encoding of a WDM-PON communication method according to the present invention;
FIG. 12 is a schematic diagram of an in-band management model of a WDM-PON communication method according to the present invention;
FIG. 13 is a schematic flowchart of Embodiment 2 of a WDM-PON communication method according to the present invention;
FIG. 14 is a schematic structural diagram of Embodiment 1 of a WDM-PON communications apparatus according to the present invention; and
FIG. 15 is a schematic structural diagram of Embodiment 2 of a WDM-PON communications apparatus according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

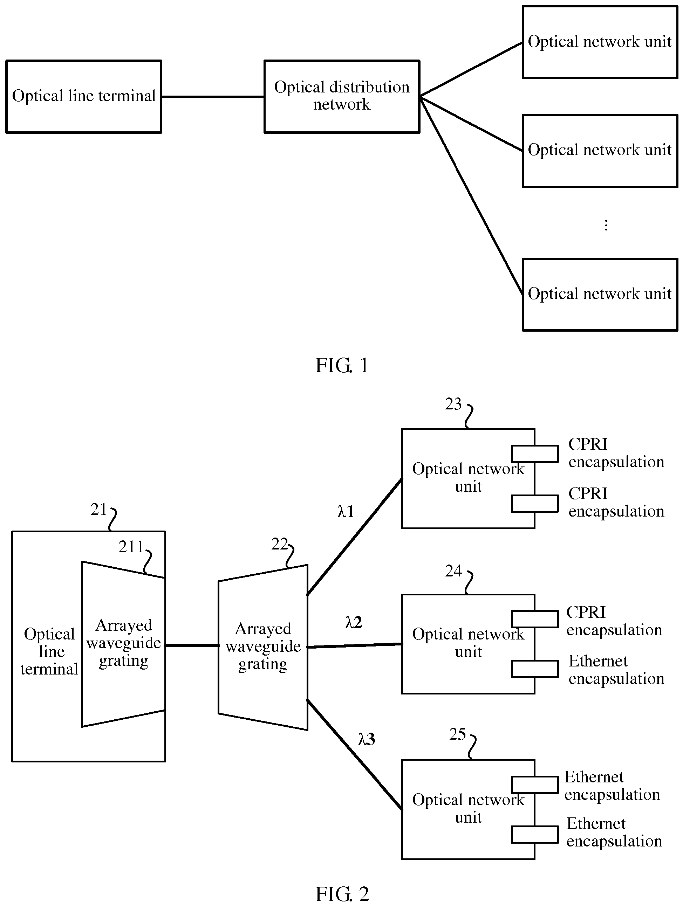

FIG. 1 shows a general structure of a PON (Passive Optical Network, passive optical network) system. Generally, a passive optical network system includes an optical line terminal located at a central office, an optical distribution network (Optical Distribution Network, ODN for short) used for branching/coupling or multiplexing/demultiplexing, and several optical network units.

FIG. 2 is a network structure diagram of a WDM-PON. As shown in FIG. 2, in an optical line terminal 21, a first arrayed waveguide grating (Arrayed Waveguide Grating, AWG for short) 211 integrated by the optical line terminal 21 multiplexes lights having multiple wavelengths into a single optical fiber for transmission, so as to improve transmission efficiency of an optical fiber network. Used as an optical distribution network, a second arrayed waveguide grating 22 re-separates the lights having multiple wavelengths that are multiplexed by the first arrayed waveguide grating 211, and respectively allocates the lights to different optical network units, for example, allocates a light having a downlink wavelength λ₁ to an optical network unit 23, allocates a light having a downlink wavelength λ₂ to an optical network unit 24, and allocates a light having a downlink wavelength λ₃ to an optical network unit 25. An encapsulation manner such as Ethernet encapsulation and/or common public radio interface (Common Public Radio Interface, CPRI for short) encapsulation may be used for data transmitted between the optical line terminal and an optical network unit, as shown in FIG. 2.

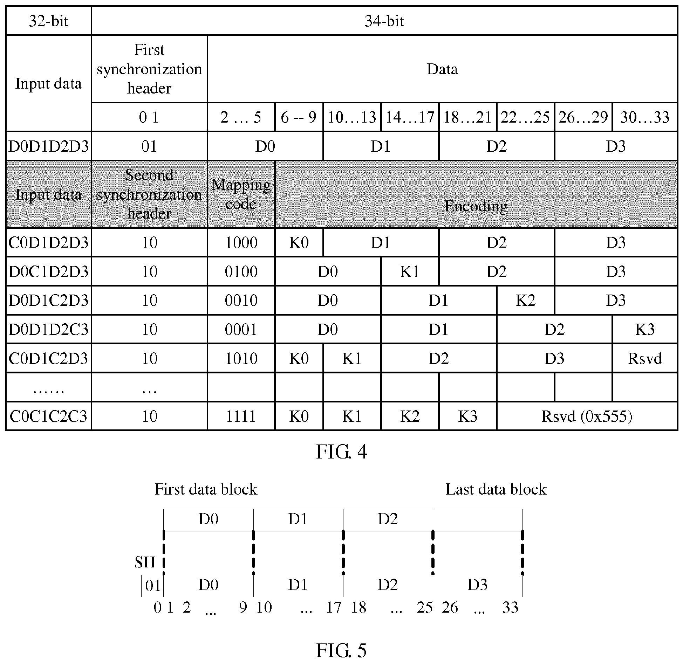

It should be noted that 8-bit/10-bit (8-bit/10-bit, 8B10B for short) encoding is a widely used encoding manner in current high-speed serial communication, for example, 8B10B encoding is used for a common Ethernet or CPRI service. However, 8B10B encoding has a bandwidth overhead up to 25%. If 32-bit/34-bit (32-bit/34-bit, 32B34B for short) encoding is used, a line gain may be increased. For conversion of 8B10B encoding into 32B34B encoding, the following method may be used:
Step 1: Receive a data stream on which 8-bit/10-bit decoding is performed, continuously receive four 8-bit binary codes, and output "D0D1D2D3", where any letter D represents an 8-bit data character block, the data stream includes four data blocks, and the four input data blocks are all 8-bit data character blocks; according to an encoding rule shown in FIG. 4, before a first data block "D0", that is, before a first bit of "D0" (provided that a value of a first synchronization header can be distinguished from a value of a second synchronization header, and the values of the first and the second synchronization headers are separately identified), add the first synchronization header SH such as "01" identifying that the data stream is all data character blocks, and output "01D0D1D2D3".
Step 2: Scramble the foregoing output 34-bit "01 D0D1D2D3", where a data block except the first synchronization header or the second synchronization header is scrambled, for example, the first synchronization header "01" is not scrambled, and only the data block "D0D1D2D3" is scrambled; during outputting, the first synchronization header "01" is added to a header of the first data block of the scrambled data block, and a finally output data stream is "01 S0S1S2S3".
Step 3: Continuously receive 51 scrambled 34-bit data blocks, and fill the header of the first scrambled 34-bit data block with 10 bits of "0", that is, "0000000000", to form a 218-byte data stream.
Step 4: Perform Reed-Solomon (Reed-Solomon, RS for short) (250-byte, 218-byte) encoding on the input 218-byte data stream, and output a 250-byte data stream. Specifically, 8 32-bit parity chunks are added to trailers of 51 pieces of 34-bit data, and plus the previously filled 10 bits, 2000-bit data, that is, 250-byte data is exactly output. The RS (250-byte, 218-byte) encoding is a type of forward error correction encoding (Forward Error Correction, FEC for short). Another encoding form of FEC may be alternatively selected. However, the RS (250-byte, 218-byte) encoding selected herein is an optimal embodiment. In addition, it can be learnt from the foregoing forming process that the output 2000-bit data, that is, the 250-byte data includes: 51 34-bit data blocks and 8 32-bit parity chunks, where the 51 34-bit data blocks are payload data.
Step 5: Remove the 10 bits filled in the foregoing output 250 bytes, and add a 34-bit data block to a header of the output data to serve as a delimiter, where the delimiter may also be referred to as a frame header or a start part of a frame, and is referred to as a frame header below for purpose of convenience. In addition, a 2-bit random number (may alternatively be any binary code) is added to a header of each of the 8 32-bit parity chunks to form 8 34-bit parity chunks, and finally form 60 34-bit data blocks, that is, 2040 bits in total. It can be learnt from the foregoing forming process that the 60 34-bit data blocks include 1 34-bit frame header, 51 34-bit data blocks as payload data, and 8 34-bit parity chunks. The payload data may be understood as an intermediate area for transmitting user data in a frame, except control information (may also be referred to as management information) of a frame header and a frame trailer. The 8 34-bit parity chunks may be understood as frame trailers, and the frame trailers are generally used for carrying check data.
Step 6: Perform bit width conversion from 34-bit to 10-bit on the foregoing 60 34-bit data streams, and output data streams that are obtained after the bit width conversion. Specifically, bit width conversion is performed on each 34-bit data block, that is, the 60 34-bit data streams are converted into 204 10-bit data streams, and the 204 10-bit data streams are output.

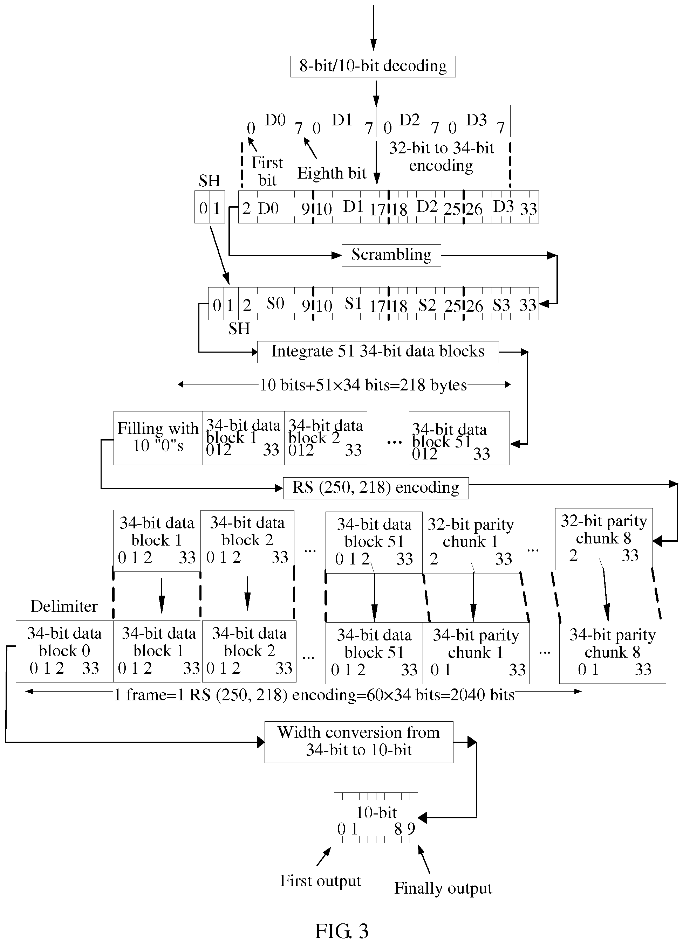

As shown in FIG. 3, FIG. 3 is a schematic diagram of converting 8B10B encoding into 32B34B encoding.

FIG. 4 is a schematic diagram of an encoding rule of 32-bit to 34-bit. Specifically, for example, the following describes a specific procedure for performing 32-bit to 34-bit encoding on an input data stream.

Step 1: Sequentially and continuously receive the data stream on which 8B10B decoding is performed, to form four data blocks, where the four data blocks have 32 bits in total, any one of the four data blocks may be a first control character block or a data character block, and any first control character block or data character block is an 8-bit binary code.

Step 2: Determine whether at least one of the received four data blocks is a first control character block or a data character block.

Step 3: If the received four data blocks are all data character blocks, and none of the blocks are control character blocks, add a first synchronization header (Synchronization Header, SH for short) to a header of a first data block of the four data blocks: no conversion is performed on the four data character blocks, and the four data character blocks are directly mapped to a data block payload (Block Payload); and output a data block to which the first synchronization header is added.

The first data block is an 8-bit binary code that is first input. The first synchronization header is added to a header location of the first data block that is first input. The first synchronization header includes a 2-bit first identification code, and the first identification code is used to identify that the data blocks are all data character blocks.

As shown in FIG. 4, if the sequentially received data blocks are D0D1D2D3, each letter represents 8-bit data characters to form a data character block. For example, D0 represents a first data character block that is first input, and is an 8-bit binary code. If the input four data blocks are all data character blocks, and none of the blocks are control character blocks, a first synchronization header "01" is added to the header of D0, and a 34-bit data block to which the first synchronization header is added, that is, 01D0D1D2D3, is output. For a specific process, reference may be made to FIG. 5.

In FIG. 5, D0D1D2D3, that is, four data blocks in total are sequentially input, where D0 is a data block that is first input. The first data block that is first input has high-order 8 bits, and the data block D3 that is finally input has low-order 8 bits. Alternatively, the first data block that is first input is defined as having low-order 8 bits, and the data block D3 that is finally input is defined as having high-order 8 bits. The first synchronization header "01" (a 2-bit binary code) is added to the header of the first data block that is first input (that is, the first data character block), and a data stream 01D0D1D2D3, 34 bits in total, is output, so that a 34-bit data stream is output in the foregoing encoding manner after a 32-bit data stream is input. The first synchronization header "01" is an example for description. A specific combination form of the 2-bit binary code is not limited provided that a 2-bit binary code is set to be capable of identifying that the data stream is all data character blocks.

Step 4: If at least one of the four data blocks is a first control character block, add a second synchronization header to the header of the first data block of the four data blocks, where the second synchronization header includes a 2-bit second identification code, and the second identification code is used to identify that at least one of the data blocks is a first control character block.

Step 5: Generate a 4-bit control character block location mapping code ("a mapping code" in FIG. 4 is "the control character block location mapping code" herein) according to a quantity of first control character blocks in the four data blocks and a location, on the data block, of the first control character block, and set the control character block location mapping code to situate next to the second synchronization header.

Step 6: Correspondingly convert each first control character block in the four data blocks into a 4-bit second control character block.

Step 7: Output the processed data blocks, where the processed data blocks include the second synchronization header, the control character block location mapping code, and the second control character block that is obtained after the conversion, or the processed data blocks include the second synchronization header, the control character block location mapping code, the second control character block that is obtained after the conversion, and the data character block.

Referring to FIG. 4 for details. For four data blocks C0D1D2D3 that are input, a letter C represents an 8-bit first control character block, and D represents an 8-bit data character block. Therefore, the input four data blocks are one first control character block C0 and three data character blocks D1, D2, and D3. Specifically, in an input data stream, a process of encoding a 32-bit data stream, of which at least one block is a control character block, to a 34-bit data stream is as follows:

First, a second synchronization header "10" is added to a header of a first data block of the input four data blocks (the header of the first data block is specifically a first binary bit that is continuously input), that is, "10" is added before C0.

Second, the first control character block in the four data blocks is "C0", and C0 is on a location of the first data block of the four data blocks, that is, a data block that is first input. In this case, a 4-bit control character block location mapping code "1000" is generated according to C0, where "1" in "1000" represents a first data block that is the first control character block in the four data blocks, and the rest three data blocks are data character blocks. In addition, "1000" is set on a location that is after the second synchronization header "10" and before the first data block.

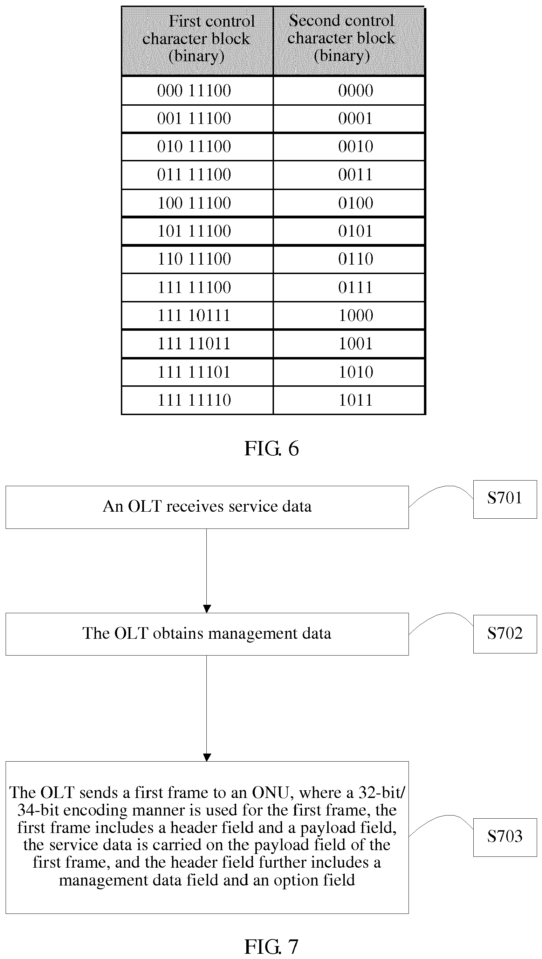

Subsequently, the 8-bit first control character block "C0" in the data blocks is converted into a 4-bit second control character block K0, where K0 represents a first second control character block, and each character K represents a 4-bit binary code. A specific conversion process is as follows:
according to the input first control character block "C0", a control character block conversion table listed in FIG. 6 is searched, and a corresponding 4-bit second control character block is output on a corresponding location of a data block, for example, "C0" is "000 11100". Therefore, by searching the control character block conversion table listed in FIG. 6, a 4-bit second control character block "0000" obtained after the conversion is correspondingly output, and the second control character obtained after the conversion in FIG. 4 is represented by K0.

In addition, a correspondence between the first control character block and the second control character block shown in FIG. 6 may be any combination, and is not limited to the correspondence displayed in the table. Currently, there are 12 types of first control character blocks, and a 4-bit binary code may represent 16 types of control characters. Therefore, the 4-bit binary code may represent 16 types of control characters provided that the 4-bit second control character block obtained after the conversion can uniquely identify the 8-bit first control character block.

Finally, no processing is performed on the data character blocks in the four data blocks, and the data character blocks are directly mapped to corresponding locations of data blocks that need to be output. The finally output 34-bit data block is "10 1000 K0D1D2D3", where "10" identifies that at least one of the input four data blocks is a first control character block, "1000" identifies that there is one first control character block located on a first data block of the four data blocks, "K0" is a second control character block into which the 8-bit first control character block "C0" is converted, and "D1D2D3" are three character blocks.

This embodiment of the present invention is targeted for services using 32B34B encoding. These services are not limited to an Ethernet service or a CPRI service, or may be another service such as a voice service or an IPTV service. Herein, this embodiment of the present invention provides a method for encapsulating management data at a data link layer by using 32B34B encoding, to establish a management channel between an OLT and an ONU, so as to manage the ONU by the OLT.

### Embodiment 1

This embodiment of the present invention provides a wavelength division multiplexing passive optical network communication method, and the method is applied to a WDM-PON shown in FIG. 2. As shown in FIG. 7, the method includes:
S701: An OLT receives service data.
   Specifically, the OLT receives the service data from an external server or a remote server. The external server may be a server that is of a third-party organization and that stores a data source. The service data is used to identify user data related to a user, or a program data stream requested by a user
S702: The OLT obtains management data.

The management data is used to identify data for the OLT to control, manage, or configure a status and a parameter of a terminal device, or the management data may be used to identify data collected, stored and processed for effectively managing a device, or the management data may be used to identify other data except the service data.

Further, the obtaining management data may be: the OLT locally generates the management data, or the OLT obtains the management data from an external device. The locally generating the management data may be performing manual configuration to generate the management data, for example, performing manual configuration by using a command line or a network management system. Alternatively, the OLT may automatically generate the management data according to information reported by an ONU. The present invention does not limit the manner for generating the management data.

The management data has multiple bytes, and one data frame may be unable to carry all the management data. In this case, a length of the management data needs to be divided according to a specific rule, that is, data fragmentation, and the fragmented management data may be carried by using multiple data frames.

S703: The OLT sends a first frame to an ONU, where a 32-bit/34-bit encoding manner is used for the first frame, the first frame includes a header field and a payload field, the service data is carried on the payload field of the first frame, and the header field further includes a management data field and an option field.

The management data field includes at least one part of multiple fragments of the management data, and the option field includes information for indicating whether the fragmentation ends. The frame may also be referred as a data stream or a bitstream.

Generally, a frame includes a frame header, a payload, and a check bit, where the frame header is located on a start part of the frame, the payload is located on an intermediate part of the frame, and the check bit is located on a trailer part of the frame. Lengths of the three parts vary with frame structures.

Optionally, the method further includes: checking the at least one part of the multiple fragments; and the header field further includes a check field, and the check field includes check data of the at least one part of the multiple fragments.

Optionally, the method further includes: checking the management data before the management data is divided into the fragments, and the check data is carried on a check field of the first frame. To be distinguished from the check field included in the header field, the check field of the first frame is referred to as a second check field, and the second check field is located on a trailer of the first frame.

Further, the OLT sends a second frame to the ONU. A header field of the second frame carries a remaining part of the management data, where the remaining part is management data except the management data carried by the first frame.

Optionally, the service data may be encoded by means of a Reed-Solomon code RS (250, 218).

Optionally, the service data may be encoded by means of a Reed-Solomon code RS (254, 238).

Optionally, the management data and the service data may be encoded by means of a Reed-Solomon code RS (253, 221).

Specifically, in-band encapsulation or out-of-band encapsulation may be used as the 32B34B encoding manner in this embodiment, and this is not limited in the present invention. For the in-band encapsulation, persons skilled in the art may understand that the management data and the service data are simultaneously carried on a same channel, or understand that from the perspective of a frame structure, there is no independent frame header or there is no independent management frame. For the out-of-band encapsulation, persons skilled in the art may understand that the management data and the service data are respectively carried on different channels, or from the perspective of a frame structure, there is an independent frame header or there is an independent management frame. Explanations for the in-band encapsulation and the out-of-band encapsulation are also applicable to other embodiments of the present invention.

In the foregoing manner in this embodiment of the present invention, management data is sent to the ONU end, so as to establish a management channel between an OLT and the ONU, and implement communication between the OLT and the ONU, thereby resolving a problem that a solution to establishing the management channel is not provided for a current WDM-PON.

For ease of understanding, this embodiment of the present invention further describes, with reference to a specific scenario, a manner of establishing the management channel and definitions of the management data and the service data.

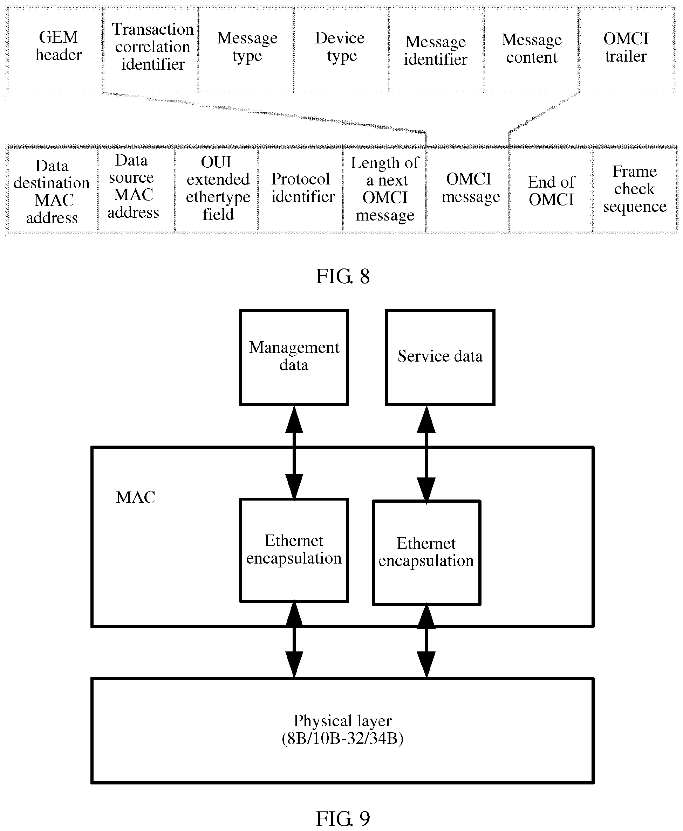

That wavelength switching is performed in a WDM-PON system is used as an example. For example, for the purpose of energy saving or load balance, the OLT adjusts the ONU originally working on a first wavelength channel to work on a second wavelength channel. With reference to this specific scenario, the OLT needs to send, to the ONU, information about adjusting a wavelength of the ONU, where the information needs to include at least information about an identifier of the ONU and information about a wavelength range or number of the second wavelength channel. Persons of ordinary skill in the art may understand that the identifier of the ONU and the wavelength range or number of the second wavelength channel are management data in a narrow sense. In addition, the management data may further include data specific to the frame. That the management data in a narrow sense is sent by using an Ethernet frame is used as an example. Necessary data in an Ethernet frame standard includes data such as a source MAC address, a destination MAC address, a protocol identifier, and a length of a next OMCI message (for details, reference may be made to the structure of the Ethernet frame shown in FIG. 8). Persons of ordinary skill in the art may understand the data defined in the foregoing standard and related to control as management data in a broad sense.

The management data described in this embodiment of the present invention includes at least the management data in a narrow sense, and certainly, may alternatively be explained as the management data in a broad sense.

It should be noted that in the foregoing wavelength switching scenario, the OLT encapsulates the identifier of the ONU and the wavelength range or number of the second wavelength channel into message content in FIG. 8, and encapsulates the frame according to a manner of an Ethernet frame. A frame format after encapsulation shown in FIG. 8 may be understood as the management data in a broad sense. The management data is sent to the ONU end, where a location of the management data in FIG. 3 is a location of 34 bits marking a delimiter in FIG. 3.

It should be noted that in any embodiment of the present invention, the foregoing frames, that is, a first frame and a second frame, may be ONU management and control interface (ONU Management and Control Interface, OMCI for short) Ethernet frames. A frame format may be defined according to an ITU-T G.986 (International Telecommunication Unit-Telecommunication Standardization Sector, International Telecommunication Unit-Telecommunication Standardization Sector) standard. An OMCI protocol is carried in the Ethernet frame format, and ONU management is performed on such a basis. By using the management channel, content such as management of CPRI interface processing may be added based on an original peer-to-peer technology (Peer-to-Peer, P2P for short) according to a new function of a mobile bearer. FIG. 8 shows the structure of the OMCI Ethernet frame. As shown in FIG. 8, the OMCI Ethernet frame may include the following content:
a data destination MAC address (destination MAC address): an amount is 6 bytes;
a data source MAC address (source MAC address): an amount is 6 bytes;
an OUI extended ethertype (OUI extended ethertype) field: an amount is 2 bytes, and the OUI extended ethertype field is used to indicate a protocol type applied to a frame data field; a Baseline type OMCI message is fixed to be 53 bytes, and an Extend type OMCI message is 1980 bytes at most; for specific content, reference may be made to an IEEE 802 standard;
a protocol identifier (protocol identifier): an amount is 5 bytes, and the protocol identifier is used to indicate a currently used protocol; for specific content, reference may be made to the IEEE 802 standard;
an organizationally unique identifier (OUI): the OUI is allocated by the Institute of Electrical and Electronics Engineers (IEEE) to an organization and includes 24 bits.
an ITU-T subtype (ITU-T subtype): a currently reserved field for an OMCI;
a length of a next OMCI message (length of next OMCI message): an amount is 2 bytes, and the length of a next OMCI message is used to indicate a length of a next message in an OMCI field;
an OMCI message (OMCI message): an amount is 40 bytes, and the OMCI message is a message managed and controlled by the ONU; for specific content, reference may be made to ITU-T G.984.4;
end of OMCI (end of OMCI): an amount is 2 bytes, and the end of OMCI indicates that an OMCI payload ends here; and
a frame check sequence (frame check sequence): an amount is 4 bytes, and the frame check sequence is used to check a frame so as to prevent an error.

An OMCI message encapsulated by using a gigabit passive optical network encapsulation method (gigabit passive optical network encapsulation method, GPON for short) includes:
a GEM header (GPON encapsulation method header, GEM header): an amount is 5 bytes, and the GEM header is used to indicate start of a frame;
a transaction correlation identifier (transaction correlation identifier): an amount is 2 bytes; the transaction correlation identifier is a group of messages corresponding to a request and a response; in a Baseline type OMCI message, a most significant bit (bit) in this field indicates a priority of the OMCI message;
a message type (message type): an amount is 1 byte; 32 types of message types are supported, and the protocol defines the fourth type to the 28^{th} type;
a device identifier (device identifier): an amount is 1 byte; 0xA indicates a Baseline type, and 0xB indicates an Extend type;
a message identifier (message identifier): an amount is 4 bytes; the message identifier is an entity ID of two bytes, and an instance ID of two bytes;
message content (message content: an amount is 32 bytes, and the message content is used to indicate a frame payload; and
an OMCI trailer (OMCI trailer): an amount is 8 bytes, and the OMCI trailer is mainly used to be filled with a check code.

In a specific implementation manner, the OLT carries both the management data and the service data on the foregoing 32B34B frame. In this case, the management data is transmitted by using a management frame different from a service frame, and a method for the OMCI Ethernet frame in FIG. 8 may be uniformly used. Details are not described herein again.

Certainly, the management data and the service data may alternatively be encapsulated into different fields of a same frame, where a field corresponding to the management data is a frame header.

FIG. 9 is a schematic diagram of an out-of-band management model of a WDM-PON communication method according to the present invention. As shown in FIG. 9, in an OLT, management data and service data are encapsulated at a Media Access Control (Media Access Control, MAC for short) layer of a data link layer and are encapsulated into different fields. A format applicable to Ethernet transmission may be used as an encapsulation manner, but the encapsulation manner is not limited thereto. Finally, the OLT sends a frame by using a physical layer.

In an out-of-band management manner, the management data is encapsulated into an overhead field, and therefore, original service data carrying efficiency is not affected.

Optionally, in another specific implementation manner, the OLT may encapsulate the management data in the following manner.

In an embodiment of encapsulating the management data, the management data is fragmented according to a preset amount, and at least one part of the management data after fragmentation is carried on a header field. That is, the OLT fragments the management data according to the preset amount, and then carries all fragments of the management data in different first frames. In this embodiment, the header field carrying the management data specifically includes: a management data field, including management data after fragmentation processing; an option (option) field, including information for indicating whether fragmentation ends; and a check field, including check data of the management data after fragmentation processing.

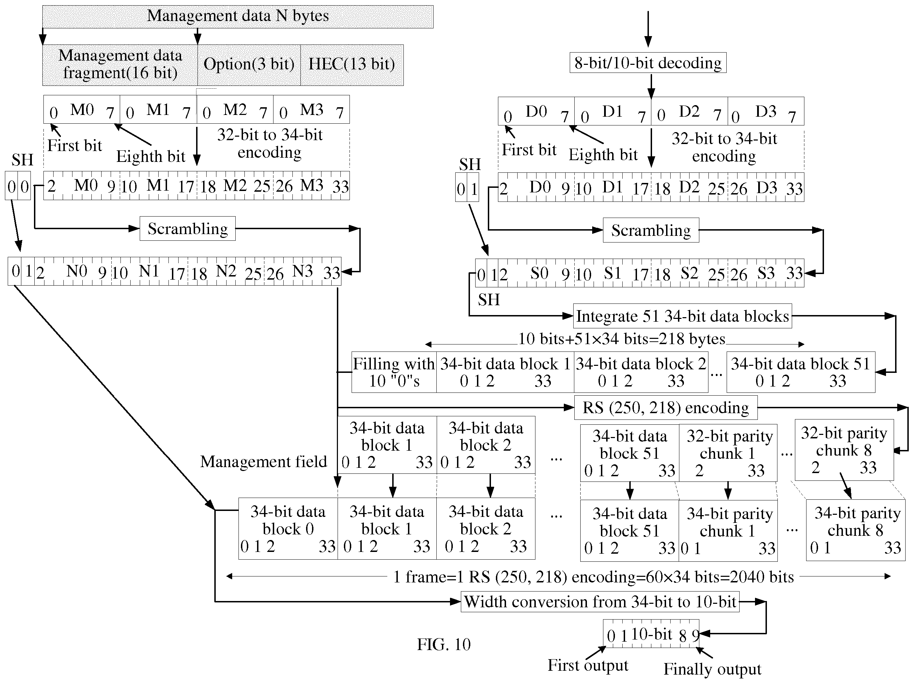

FIG. 10 is a schematic diagram of 32B34B encoding of a WDM-PON communication method according to the present invention. For example, an OLT needs to transmit 16-byte management data to an ONU. Because a single-frame effective management data payload is 2 bytes, the management data needs to be fragmented. In this example, the 16-byte management data is divided into 8 fragments, the 8 fragments of management data are respectively carried on 8 Ethernet frames, and each Ethernet frame carries 2 bytes. Certainly, that the management data has 16 bytes is used in this example. Actually, the management data for transmission may have less bytes or more bytes, and this is not limited in the present invention. An option field may use 3 bits, where a first bit is a fragmentation end identifier and is used to indicate whether the fragmentation ends, for example, "1" indicates that the fragmentation ends, and "0" indicates that there is fragmentation that does not end; a second bit is used to indicate a dying gasp (dying gasp) function; and a third bit is temporarily reserved.

It can be learnt by comparing content shown in FIG. 3 with content shown in FIG. 10 that, a difference between the two pieces of content lies in use of frame headers in two encoding manners. Content in a dotted-line box of FIG. 10 is a format of the management data carried by a frame header. As shown in FIG. 10, in each frame, the frame header carries 2-byte management data, a 3-bit option field, and a 13-bit check field, that is, 32-bit data in total. The check field checks the management data by means of hybrid error correction (hybrid error correction, HEC for short). Certainly, the check field may alternatively use another error correction manner in the prior art, such as forward error correction encoding (Forward Error Correction, FEC for short) or backward error correction encoding (Backward Error Correction, BEC for short).

The following details 32B34B encoding performed on the management data.

Step 11: After a 32-bit data stream is continuously received, output "M0M1M2M3", where any letter M represents an 8-bit data character block; according to an encoding rule shown in FIG. 4, before a first data block "M0", that is, before a first bit of "M0" (provided that a value of a third synchronization header can be distinguished from values of first and second synchronization headers, and the values of the first, the second, and the third synchronization headers are separately identified), add the third synchronization header SH such as "00" identifying that the data stream is all data character blocks, and output "00 M0M1M2M3", that is, 34-bit data in total.

Step 12: Scramble the foregoing output 34-bit "00 M0M1M2M3", where a data block except a synchronization header is scrambled, for example, the synchronization header "00" is not scrambled, and only "M0M1M2M3" is scrambled; during outputting, a first synchronization header "00" is added to the header of the first data block of the scrambled data block, and a finally output data stream is "00 N0N1N2N3".

Step 13: Place one processed 34B management data block in an existing delimiter field (that is, a frame header).

Step 14: Compose 8 32-bit parity chunks by using 32-byte parity check data generated by means of RS (250, 218). A fourth synchronization header such as "11" is added to a header of each parity chunk (provided that a value of the fourth synchronization header can be distinguished from values of the first, the second, and the third synchronization headers, and the values of the first, the second, the third, and the fourth synchronization headers are separately identified), to form a 34-bit parity chunk and finally form 60 34-bit data blocks, that is, 2040 bits in total. It can be learnt from the foregoing forming process that the 60 34-bit data blocks include: 1 34-bit frame header (a management data block that does not participate in RS (250, 218) encoding), 51 34-bit data blocks as payload data, and 8 34-bit parity chunks.

For N-byte management data, N is greater than 2. The N-byte management data is first fragmented, for example, a manner of N-to-2 rounding up is used to obtain a quantity of frames required for carrying the N-byte management data. In the N-byte management data, the zeroth byte of the management data and the first byte of the management data are a first frame, the second byte of the management data and the third byte of the management data are a second frame, and by analogy, this ends with the last byte of the management data. During encapsulation, when an accumulated quantity of currently encapsulated frames is less than the quantity of the frames, a first bit of the option field is marked as "0"; when an accumulated quantity of currently transmitted frames is equal to the quantity of the frames, the first bit of the option field is marked as "1", so as to implement transmission of the whole management data.

In this embodiment, the management data is first fragmented, and then HEC check is performed on the fragmented management data in each frame to ensure validity of the management data.

In another embodiment of encapsulating the management data, an OLT first checks the management data, and then fragments and carries the management data. For example, FEC is performed on the management data, and the management data after FEC and redundant fields are sequentially filled into the frame header. An effective bandwidth used in the previous embodiment is only 2 bytes, and has relatively low efficiency. To improve efficiency, all the management data may be combined in this embodiment, and the management data after FEC encoding and the redundant fields are sequentially filled into the frame header. In this case, a check field does not need to be contained in a frame.

In this embodiment, after FEC is performed on the management data, the management data is fragmented according to a preset amount, and at least one part of the management data is carried on a header field. The header field carrying the management data specifically includes: a management data field, including management data after fragmentation and encoding processing, that is, including at least one part of the management data after the FEC encoding; and an option (option) field, including information for indicating whether the fragmentation ends; the option (option) field uses bits of a preset amount, where a first bit in the option (option) field is used to indicate whether the fragmentation ends, and a second bit in the option (option) field is used to indicate dying gasp.

In each frame, a header field includes management data that is of a preset amount and on which FEC is performed, and an option field of a corresponding bit, that is, 32-bit data in total, such as a 3-bit option field and 29-bit management data after FEC.

During encapsulation, when an accumulated quantity of currently encapsulated frames is less than the quantity of the frames, a first bit of the option field is marked as "0"; when an accumulated quantity of currently transmitted frames is equal to the quantity of the frames, the first bit of the option field is marked as "1", so as to implement transmission of the whole management data. In this embodiment, FEC is first performed on the management data, and the management data on which FEC is performed is fragmented.

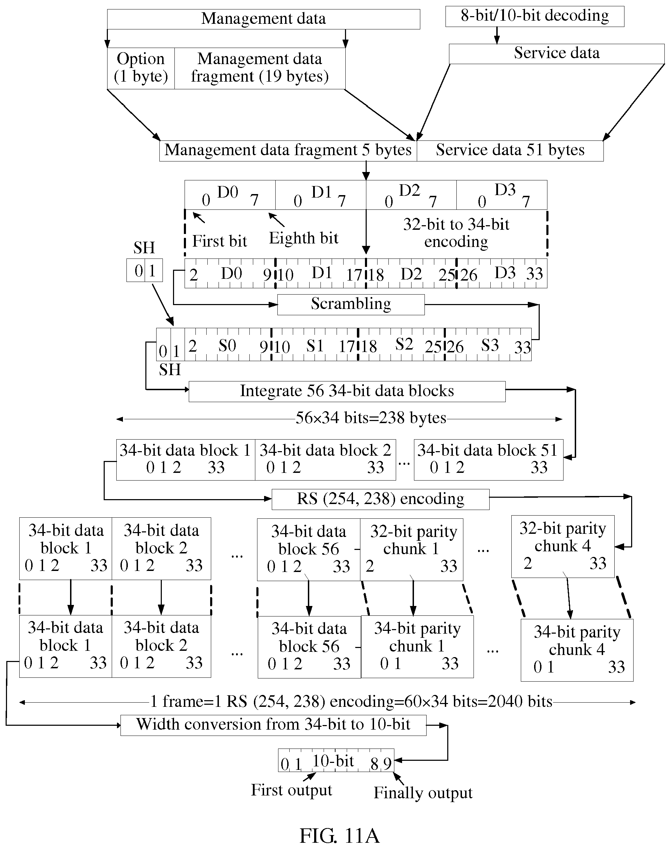

In still another embodiment of encapsulating the management data, a new RS encoding manner is redefined in this embodiment. FIG. 11A is a schematic diagram of another 32B34B encoding of a WDM-PON communication method according to the present invention. As shown in FIG. 11A, RS (254, 238) encoding is used to process service data in this embodiment.

Referring to FIG. 11A, the following details 32B34B encoding performed on data.

Step 21: Receive a frame on which 8B10B decoding is performed, continuously receive four 8-bit binary codes, and output "D0D1D2D3", where any letter D represents an 8-bit data character block; according to an encoding rule shown in FIG. 4, before a first data block "D0", that is, before a first bit of "D0" (provided that a value of a first synchronization header can be distinguished from a value of a second synchronization header, and the values of the first and the second synchronization headers are separately identified), add the first synchronization header SH such as "01" identifying that the frame is all data character blocks, and output "01D0D1D2D3".

Step 22: Scramble the foregoing output 34-bit "01 D0D1D2D3", where a data block except the first synchronization header or the second synchronization header is scrambled, for example, the first synchronization header "01" is not scrambled, and only the data block "D0D1D2D3" is scrambled; during outputting, the first synchronization header "01" is added to the header of the first data block of the scrambled data block, and a finally output frame is "01 S0S1S2S3".

Step 23: Receive 32-bit management data and output "M0M1M2M3", where any letter M represents an 8-bit data character block; before first management data "M0", that is, before a first bit of "M0" (provided that a value of a third synchronization header can be distinguished from values of the first and the second synchronization headers, and the values of the first, the second, and the third synchronization headers are separately identified), add the third synchronization header SH such as "00", and output "00D0D1D2D3".

Step 24: Scramble the foregoing output 34-bit "00 M0M1M2M3", where a data block except the third synchronization header is scrambled, for example, the third synchronization header "00" is not scrambled, and only "M0M1M2M3" is scrambled; during outputting, the third synchronization header "00" is added to the header of the first data block of the scrambled data block, and "00 N0N1N2N3" is finally output.

Step 25: Continuously receive 51 34-bit service data blocks on which scrambling processing is performed and 5 34-bit management data blocks to form a 238-byte frame.

Step 26: Perform RS (254 bytes, 238 bytes) encoding on the foregoing 238-byte frame, and output a 254-byte frame. Specifically, 4 32-bit parity chunks are added to trailers of 56 pieces of 34-bit data, and 2032-bit data, that is, 254-byte data is exactly output. In addition, it can be learnt from the foregoing forming process that the output 2032-bit data, that is, the 254-byte data includes: 56 34-bit data blocks and 4 32-bit parity chunks, where the 56 34-bit data blocks are payload data.

Step 27: Add a fourth synchronization header such as "11" to a header of each of the 4 32-bit parity chunks (provided that a value of the fourth synchronization header can be distinguished from values of the first, the second, and the third synchronization headers, and the values of the first, the second, the third, and the fourth synchronization headers are separately identified), to form 4 34-bit parity chunks, and finally form 60 34-bit data blocks, that is, 2040 bits in total. It can be learnt from the foregoing forming process that the 60 34-bit data blocks include 5 34-bit frame headers (that is, management data blocks), 51 34-bit data blocks as payload data, and 4 34-bit parity chunks.

Step 28: Perform bit width conversion from 34-bit to 10-bit on the foregoing frame of 60×34 bits, and output a frame that is obtained after the bit width conversion. Specifically, bit width conversion is performed on each 34-bit data block, that is, the frame of 60×34 bits is converted into a frame of 204×10 bits, and the frame of 204×10 bits is output.

Step 21 to step 26 are used to perform 32B34B encoding on service data in this embodiment of the present invention. An encoding manner with less redundant bytes is used for encoding, so as to effectively utilize the bandwidth and improve data transmission efficiency.

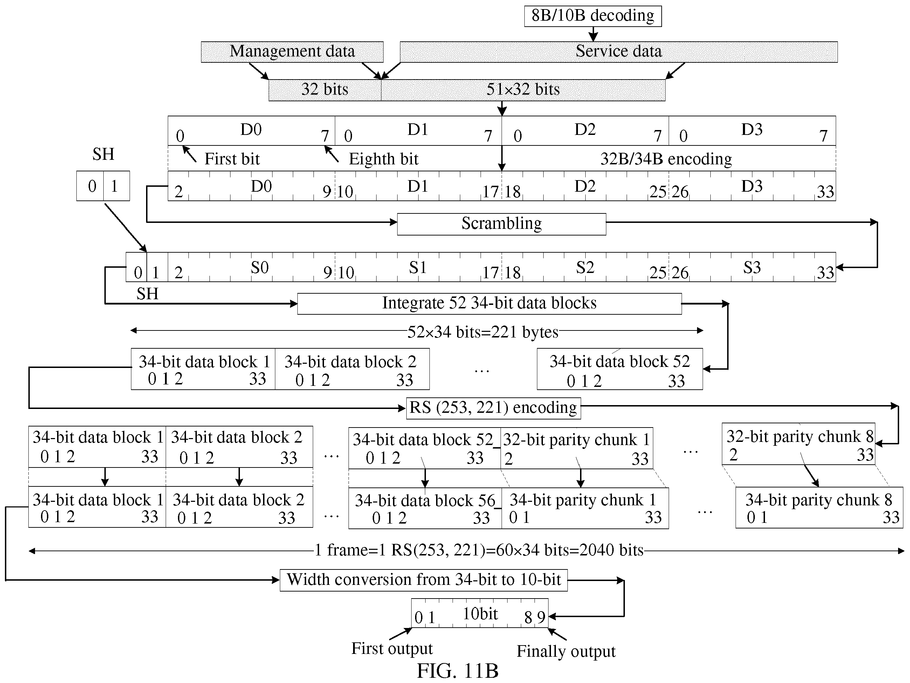

In still another embodiment of encapsulating the management data, a new RS encoding manner is redefined in this embodiment. FIG. 11B is a schematic diagram of another 32B34B encoding of a WDM-PON communication method according to the present invention. As shown in FIG. 11B, RS (253, 221) encoding is used to process service data and management data in this embodiment.

Referring to FIG. 11B, the following details 32B34B encoding performed on data.

In a specific implementation manner, one 32-bit management data block and 51 32-bit service data blocks are assembled together to perform 32B34B encoding, and FEC RS (253, 221) encoding is used for the encoded data. 32-Byte FEC redundancy generated after encoding is encapsulated into 8 32-bit redundant blocks, and 32B34B encoding is then performed on the 8 32-bit redundant blocks. A final total data amount is (1+51+8)×34=2040 bits, and is the same as a total data amount of entered 51 10-bit data blocks. Specific steps are as follows.

Step 31: Receive service data on which 8B10B decoding is performed, continuously receive four 8-bit binary codes, and output "D0D1D2D3", where any letter D represents an 8-bit data character block; according to an encoding rule shown in FIG. 4, before a first data block "D0", that is, before a first bit of "D0" (provided that a value of a first synchronization header can be distinguished from a value of a second synchronization header, and the values of the first and the second synchronization headers are separately identified), add the first or the second synchronization header SH such as "01", and output "01D0D1D2D3".

Step 32: Scramble the foregoing output 34-bit "01 D0D1D2D3", where a data block except the first synchronization header or the second synchronization header is scrambled, for example, the first synchronization header "01" is not scrambled, and only the data block "D0D1D2D3" is scrambled; during outputting, the first synchronization header "01" is added to the header of the first data block of the scrambled data block, and "01 S0S1S2S3" is finally output.

Step 33: Receive 32-bit management data and output "M0M1M2M3", where any letter M represents an 8-bit data character block; before first management data "M0", that is, before a first bit of "M0" (provided that a value of a third synchronization header can be distinguished from values of the first and the second synchronization headers, and the values of the first, the second, and the third synchronization headers are separately identified), add the third synchronization header SH such as "00", and output "00D0D1D2D3".

Step 34: Scramble the foregoing output 34-bit "00 M0M1M2M3", where a data block except the third synchronization header is scrambled, for example, the third synchronization header "00" is not scrambled, and only "M0M1M2M3" is scrambled; during outputting, the third synchronization header "00" is added to the header of the first data block of the scrambled data block, and "00 N0N1N2N3" is finally output.

Step 35: Receive 51 34-bit service data blocks on which scrambling processing is performed and 1 34-bit management data block to form a 221-byte frame.

Step 36: Perform RS (253, 221) encoding on the foregoing 221-byte frame, and output a 253-byte frame. Specifically, 8 32-bit parity chunks are added to the trailers of 52 pieces of 34-bit data, and 2024-bit data, that is, 253-byte data is exactly output. In addition, it can be learnt from the foregoing forming process that the output 2024-bit data, that is, the 253-byte data includes: 52 34-bit data blocks and 8 32-bit parity chunks, where the 52 34-bit data blocks are a combination of the management data and the service data.

Step 37: Add a fourth synchronization header such as "11" to the header of each of the 8 32-bit parity chunks (provided that a value of the fourth synchronization header can be distinguished from values of the first, the second, and the third synchronization headers, and the values of the first, the second, the third, and the fourth synchronization headers are separately identified), to form 8 34-bit parity chunks, and finally form 60 34-bit data blocks, that is, 2040 bits in total. It can be learnt from the foregoing forming process that the 60 34-bit data blocks include 1 34-bit frame header (that is, management data blocks), 51 34-bit data blocks as payload data, and 8 34-bit parity chunks.

Step 38: Perform bit width conversion from 34-bit to 10-bit on the foregoing frame of 60×34 bits, and output a frame that is obtained after the bit width conversion. Specifically, bit width conversion is performed on each 34-bit data block, that is, the frame of 60×34 bits is converted into a frame of 204×10 bits, and the frame of 204×10 bits is output.

In a specific implementation manner, the management data is fragmented according to a preset amount, and at least one part of the management data is carried on a header field. The header field carrying the management data specifically includes: a management data field, including multiple fragments of the at least one part of the management data; an option (option) field, where the option (option) field uses bits of a preset amount, a first bit in the option (option) field is used to indicate whether the fragmentation ends, and a second bit in the option (option) field is used to indicate dying gasp; and a check field, used to check validity of the management data in the management data field.

In a specific implementation manner, the management data in this embodiment is the management data after FEC. The header field carrying the management data may include: a management data field, used to carry at least one part of the management data after the FEC encoding; and an option field, where the option field uses bits of a preset amount, a first bit in the option field is used to indicate whether the fragmentation ends, a second bit in the option field is used to indicate dying gasp, and other bits are temporarily reserved.

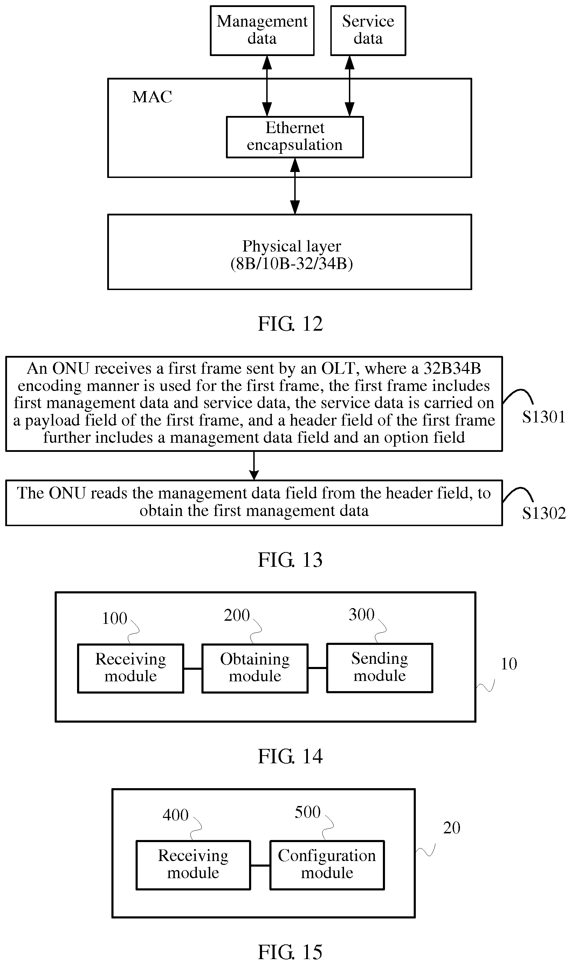

An Ethernet service is used as an example for description in FIG. 12. At a MAC layer, 32B34B encapsulation is performed on the management data and the service data, where the Ethernet service is encapsulated by using an Ethernet frame, and an Ethernet management data frame is inserted into an Ethernet service data frame. A format of the Ethernet management data frame is defined according to an ITU-G.986 standard. An OMCI protocol may be carried in an Ethernet, and ONU management is performed on such a basis. Finally, the encapsulated frame is sent by using a physical layer.

### Embodiment 2

FIG. 13 is a schematic flowchart of Embodiment 2 of a WDM-PON communication method according to the present invention. This embodiment of the present invention further provides a wavelength division multiplexing passive optical network communication method, and the method is applied to a WDM-PON shown in FIG. 2. The method may be performed by an optical network terminal device. The device may be independently set or may be integrated into a device such as an ONU, and this is not limited in the present invention. As shown in FIG. 13, the method includes:

S1301: The ONU receives a first frame sent by an OLT, where a 32B34B encoding manner is used for the first frame, the first frame includes first management data and service data, the service data is carried on a payload field of the first frame, and a header field of the first frame further includes a management data field and an option field.

The management data field includes at least one part of the first management data after fragmentation, and the option field includes information for indicating whether fragmentation ends.

S1302: The ONU reads the management data field from the header field, to obtain the first management data.

Generally, the management data has multiple bytes, and one data frame may be unable to carry the management data. In this case, a length of the management data needs to be divided according to a specific rule, that is, data fragmentation, and the fragmented management data may be carried by using multiple data frames.

Optionally, the frame header further includes a check field, including check data of multiple fragments of the first management data.

Optionally, the service data is encoded by means of a Reed-Solomon code RS (250, 218).

Optionally, the service data is encoded by means of a Reed-Solomon code RS (254, 238).

Optionally, the management data and the service data are encoded by means of a Reed-Solomon code RS (253, 221).

Optionally, the method further includes:
determining, according to the information in the option field for indicating whether the fragmentation ends, that the fragmentation does not end;
receiving, by the ONU, a second frame sent by the OLT, where a header field of the second frame includes second management data;
obtaining the second management data and combining the first management data and the second management data; and
performing corresponding configuration according to the combined first management data and second management data.

Corresponding to the foregoing embodiment of a transmit end, this embodiment of the present invention is an embodiment of a receive end. Frames involved in a transmit end and a receive side and content carried in fields of the frames are the same. For details, reference may be made to the description of the transmit end provided in Embodiment 1 of the present invention. Details are not described herein again. As a receive end, the ONU obtains, after receiving the foregoing frames (including a first frame and a second frame), management data in the frames by means of parsing, and configures a status of the ONU according to the management data, so as to manage the ONU by the OLT.

It should be noted that for specific content of the frame header, reference may be made to information of the transmit end provided in Embodiment 1 of the present invention. In this embodiment of the present invention, details are not described herein again.

Specifically, in-band encapsulation or out-of-band encapsulation may be used as 32B34B encapsulation in this embodiment, and this is not limited in the present invention. For the in-band encapsulation, persons skilled in the art may understand that the management data and the service data are simultaneously carried on a same channel, or understand that from the perspective of a frame structure, there is no independent management field or there is no independent management frame. For the out-of-band encapsulation, persons skilled in the art may understand that the management data and the service data are respectively carried on different channels, or from the perspective of a frame structure, there is an independent management field or there is an independent management frame.

In actual application, the OLT manages at least one ONU, where the at least one ONU receives a frame that is delivered by the OLT and that includes management data, extracts the management data from the frame, and completes configuration of the ONU, so that the OLT manages a status of the at least one ONU.

In the foregoing manner in this embodiment of the present invention, the ONU end receives management data sent by an OLT, so as to establish a management channel between the OLT and the ONU, and implement communication between the OLT and the ONU, thereby resolving a problem that a solution to establishing the management channel is not provided for a current WDM-PON.

It should be noted that the foregoing frames described in any embodiment of the present invention, that is, a first frame and a second frame, may be OMCI Ethernet frames. A frame format may be defined according to a G.986 standard. An OMCI protocol is carried in an Ethernet, and management of the ONU is performed on such a basis. By using the management channel, content such as management of CPRI interface processing may be added based on original P2P according to a new function of a mobile bearer.

In a specific implementation manner, the management data and the service data are respectively carried on different frames. In this case, the management data is transmitted by using a management frame different from a service frame, and a method for the OMCI Ethernet frame in FIG. 8 may be uniformly used. Details are not described herein again.

Certainly, the management data and the service data may alternatively be encapsulated into different fields of a same frame, where a field corresponding to the management data is a management field.

The foregoing frame may be generated in the following manner: in the OLT, at a MAC layer of a data link layer, an out-of-band management model shown in FIG. 9 is used to encapsulate the management data and the service data and encapsulate the management data and the service data into different fields of a frame. A format applicable to Ethernet transmission may be used as an encapsulation manner, but the encapsulation manner is not limited thereto.

In an out-of-band management manner, the management data is encapsulated into an overhead field, and therefore, original service data carrying efficiency is not affected.

Optionally, the service data may be encoded by means of RS (250, 218).

Optionally, the service data may be encoded by means of RS (254, 238). Persons of ordinary skill in the art should understand that an encoding manner with less redundant bytes is used for encoding in this embodiment of the present invention. A length of a frame header of a frame in this encoding manner is longer than that in RS (250, 218) encoding.

In an embodiment of a management data encapsulation manner, the management data is fragmented according to a preset amount, and at least one part of the management data is carried on a header field, that is, the OLT fragments the management data according to the preset amount, and carries all fragments of the management data in different frames. In this embodiment, the header field specifically includes: a management data field, including at least one part of the management data after fragmentation; an option (option) field, where the option field includes information for indicating whether the fragmentation ends, the option field uses bits of a preset amount, a first bit in the option field is used to indicate whether the fragmentation ends, and a second bit in the option field is used to indicate dying gasp; and a check field, where the check field may include check data of the management data after the fragmentation processing and is used to check validity of the management data in the management data field.

Further, for example, the option field uses 3 bits, that is, bits of the preset amount are 3 bits, where a first bit is a fragmentation end identifier and is used to indicate whether the fragmentation ends, for example, "1" indicates that the fragmentation ends, and "0" indicates that there is fragmentation that does not end; a second bit is used to indicate a dying gasp (dying gasp) function; and a third bit is temporarily reserved.

Corresponding to a transmit end, in the frame received by the ONU, the header field may further include: a management data field, used to carry at least one part of the encoded management data, and an option field, where a first bit in the option field may be used to indicate whether the fragmentation ends, and a second bit in the option field may be used to indicate dying gasp.

For example, corresponding to the transmit end, during decapsulation, it is determined, according to the information in the option field for indicating whether the fragmentation ends, that the fragmentation does not end. The ONU receives a second frame sent by the OLT, where a header field of the second frame includes second management data; obtains the second management data and combines the first management data and the second management data; and performs corresponding configuration according to the combined first management data and second management data.

### Embodiment 3

FIG. 14 is a schematic structural diagram of Embodiment 1 of a WDM-PON communications apparatus according to the present invention. This embodiment of the present invention further provides a wavelength division multiplexing passive optical network communications apparatus, and the apparatus is applied to a WDM-PON shown in FIG. 2. The apparatus may be independently set or may be integrated into a device such as an OLT, and this is not limited in the present invention. The apparatus 10 includes a receiving module 100, an obtaining module 200, and a sending module 300.

The receiving module 100 is configured to receive service data, the obtaining module 200 is configured to obtain management data, and the sending module 300 is configured to send a first frame to an ONU, where 32-bit/34-bit encoding is used for the first frame, the first frame includes a header field and a payload field, and the service data is carried on the payload field of the frame; the header field includes a management data field, including at least one part of multiple fragments of the management data, and an option field, including information for indicating whether fragmentation ends.

This embodiment of the present invention is an apparatus embodiment corresponding to the foregoing method embodiment of the transmit end.

Optionally, the apparatus further includes a check module, configured to check the at least one part of the multiple fragments; and the header field further includes a check field, including check data of the at least one part of the multiple fragments.

Specifically, in-band encapsulation or out-of-band encapsulation may be used as 32B34B encapsulation in this embodiment, and this is not limited in the present invention. For the in-band encapsulation, persons skilled in the art may understand that the management data and the service data are simultaneously carried on a same channel, or understand that from the perspective of a frame structure, there is no independent management field or there is no independent management frame. For the out-of-band encapsulation, persons skilled in the art may understand that the management data and the service data are respectively carried on different channels, or from the perspective of a frame structure, there is an independent management field or there is an independent management frame.

By means of cooperative work of the modules in this embodiment of the present invention, management data is sent to the ONU end, so as to establish a management channel between an OLT and the ONU. The OLT integrates the foregoing apparatus, so as to implement communication between the OLT and the ONU, thereby resolving a problem that a solution to establishing the management channel is not provided for a current WDM-PON.

It should be noted that in any embodiment of the present invention, the foregoing first frame may be an OMCI Ethernet frame. A format of the first frame may be defined according to an ITU-G G.986 standard. An OMCI protocol is carried in an Ethernet, and management of the ONU is performed on such a basis. By using the management channel, content such as management of CPRI interface processing may be added based on original P2P according to a new function of a mobile bearer.

In a specific implementation manner, the apparatus 10 respectively carries the management data and the service data on different frames. In this case, the management data is transmitted by using a management frame different from a service frame, a method for the OMCI Ethernet frame in FIG. 8 may be uniformly used. Details are not described herein again.

Certainly, the management data and the service data may alternatively be encapsulated into different fields of a same frame.

FIG. 9 is a schematic diagram of an out-of-band management model of a WDM-PON communication method according to the present invention. As shown in FIG. 9, at a MAC layer of a data link layer, the apparatus 10 encapsulates the management data and the service data and encapsulates the management data and the service data on different fields. A format applicable to Ethernet transmission may be used as an encapsulation manner, but the encapsulation manner is not limited thereto. Finally, the frame is sent by using a physical layer.

In an out-of-band management manner, the management data is encapsulated into an overhead field, and therefore, original service data carrying efficiency is not affected.

Optionally, the service data may be encoded by means of RS (250, 218).

Optionally, the service data may be encoded by means of RS (254, 238). Persons of ordinary skill in the art should understand that an encoding manner with less redundant bytes is used for encoding in this embodiment of the present invention. A header field of a frame in this encoding manner is longer than that in RS (250, 218) encoding.

Based on the foregoing embodiment, the apparatus 10 may encapsulate the management data in the following manner.

In an embodiment of encapsulating the management data, the management data is fragmented according to a preset amount, and at least one part of the management data is carried on a header field. In this embodiment, the header field carrying the management data specifically includes: a management data field, used to carry at least one part of the management data after fragmentation; an option (option) field, where the option (option) field uses bits of a preset amount, a first bit in the option (option) field is used to indicate whether the fragmentation ends, a second bit in the option (option) field is used to indicate dying gasp; and a check field, used to check validity of the management data in the management data field.

As shown in FIG. 10, content in a dotted-line box shows a difference between 32B34B encoding in this embodiment of the present invention and 32B34B encoding in the prior art. Because a single-frame effective management data payload is 2 bytes, the management data needs to be fragmented. For example, the option field uses 3 bits, that is, bits of the preset amount are 3 bits, where a first bit is a fragmentation end identifier and is used to indicate whether the fragmentation ends, for example, "1" indicates that the fragmentation ends, and "0" indicates that there is fragmentation that does not end; a second bit is used to indicate a dying gasp (dying gasp) function; and a third bit is temporarily reserved.

As shown in FIG. 10, in each frame, the frame header carries 2-byte management data, a 3-bit option field, and a 13-bit check field, that is, 32-bit data in total. The check field checks the management data by means of HEC. The following details 32B34B encoding performed on the management data.

Step 11: After a 32-bit data stream is continuously received, output "D0D1D2D3", where any letter D represents an 8-bit data character block; according to an encoding rule shown in FIG. 4, before a first data block "D0", that is, before a first bit of "D0" (provided that a value of a first synchronization header can be distinguished from a value of a second synchronization header, and the values of the first and the second synchronization headers are separately identified), add the first synchronization header SH such as "01" identifying that the data stream is all data character blocks, and output "01D0D1D2D3", that is, 34-bit data in total.

Step 12: Scramble the foregoing output 34-bit "01 D0D1D2D3", where a data block except the synchronization header is scrambled, for example, the synchronization header "01" is not scrambled, and only the data block "D0D1D2D3" is scrambled; during outputting, the first synchronization header "01" is added to a header of the first data block of the scrambled data block, a finally output data stream "01 S0S1S2S3" is data obtained after 32B34B encoding is performed on the 2-byte management data, and the data stream is carried on the foregoing management field.

For N-byte management data, N is greater than 2. The N-byte management data is first fragmented, for example, a manner of N-to-2 rounding up is used to obtain a quantity of frames required for carrying the N-byte management data. In the N-byte management data, the zeroth byte of the management data and the first byte of the management data are a first frame, the second byte of the management data and the third byte of the management data are a second frame, and by analogy, this ends with the last byte of the management data. During encapsulation, when an accumulated quantity of currently encapsulated frames is less than the quantity of the frames, a first bit of the option field is marked as "0"; when an accumulated quantity of currently transmitted frames is equal to the quantity of the frames, the first bit of the option field is marked as "1", so as to implement transmission of the whole management data.

In this embodiment, the management data is first fragmented, and then HEC check is performed on the fragmented management data in each frame to ensure validity of the management data.

In another embodiment of encapsulating the management data, the apparatus 10 respectively carries the management data and the service data on different fields of a frame. A difference between this embodiment and the previous embodiment is that the OLT first checks the management data, and then fragments and carries the management data. For example, FEC is performed on the management data, and the management data after FEC and redundant fields are sequentially filled into the frame header. An effective bandwidth used in the previous embodiment is only 2 bytes, and has relatively low efficiency. To improve efficiency, all the management data may be combined in this embodiment, and the management data after FEC encoding and the redundant fields are sequentially filled into the frame header. In this case, a check field does not need to be contained in a frame.

In this embodiment, that the at least one part of the management data is carried on the frame header of the frame may specifically include: the management data on which FEC is performed is fragmented according to a preset amount, and at least one part of the management data is carried on a frame header; the field carrying the management data may include: a management data field, used to carry at least one part of the management data after FEC encoding; and an option field, where the option field uses bits of a preset amount, a first bit in the option field is used to indicate whether fragmentation ends, and a second bit in the option field is used to indicate dying gasp.

In each frame, a frame header carries management data that is of a preset amount and on which FEC is performed, and an option field of a corresponding bit, that is, 32-bit data in total, such as a 3-bit option field and 29-bit management data after FEC. A 32B34B encoding manner of the management data after FEC is similar to that in FIG. 10. Step 11 and step 12 in the previous embodiment are used to perform 32B34B encoding, and a difference between the two embodiments is only a difference between frame structures.

For M-bit management data after FEC, M is greater than 29. The M-bit management data after FEC is fragmented, for example, a manner of M-to-29 rounding up is used to obtain a quantity of frames required for carrying the M-bit management data after FEC. In the M-bit management data after FEC, the zeroth bit to 28^{th} bit of the management data after FEC are a first frame, and by analogy, this ends with the last bit of the management data. During encapsulation, when an accumulated quantity of currently encapsulated frames is less than the quantity of the frames, a first bit of the option field is marked as "0"; when an accumulated quantity of currently transmitted frames is equal to the quantity of the frames, the first bit of the option field is marked as "1", so as to implement transmission of the whole management data. In this embodiment, FEC is first performed on the management data, and the management data on which FEC is performed is fragmented.

In still another embodiment of encapsulating the management data, a new RS encoding manner is redefined in this embodiment. As shown in FIG. 11A, RS (254, 238) encoding is used to process service data in this embodiment.

Referring to FIG. 11A, the following details 32B34B encoding performed on data.

Step 21: Receive a data stream on which 8B10B decoding is performed, continuously receive four 8-bit binary codes, and output "D0D1D2D3", where any letter D represents an 8-bit data character block; according to an encoding rule shown in FIG. 4, before a first data block "D0", that is, before a first bit of "D0" (provided that a value of a first synchronization header can be distinguished from a value of a second synchronization header, and the values of the first and the second synchronization headers are separately identified), add the first synchronization header SH such as "01" identifying that the data stream is all data character blocks, and output "01D0D1D2D3".

Step 22: Scramble the foregoing output 34-bit "01 D0D1D2D3", where a data block except the first synchronization header or the second synchronization header is scrambled, for example, the first synchronization header "01" is not scrambled, and only the data block "D0D1D2D3" is scrambled; during outputting, the first synchronization header "01" is added to a header of the first data block of the scrambled data block, and a finally output data stream is "01 S0S1S2S3".

Step 23: Receive 32-bit management data, and output "M0M1M2M3", where any letter M represents an 8-bit data character block; add a third synchronization header SH such as "00" before first data block M0, that is, before a first bit of "M0", and output "00D0D1D2D3".

Step 24: Scramble the foregoing output 34-bit "00 M0M1M2M3", where a data block except the third synchronization header is scrambled, for example, the third synchronization header "00" is not scrambled, and only "M0M1M2M3" is scrambled; during outputting, the third synchronization header "00" is added to the header of the first data block of the scrambled data block, and "00 N0N1N2N3" is finally output.

Step 25: Continuously receive 51 34-bit service data blocks on which scrambling processing is performed and 5 34-bit management data blocks to form a 238-byte data stream.

Step 26: Perform RS (254 bytes, 238 bytes) encoding on the foregoing 238-byte data stream, and output a 254-byte data stream. Specifically, 4 32-bit parity chunks are added to trailers of 56 pieces of 34-bit data, and 2032-bit data, that is, 254-byte data is exactly output. In addition, it can be learnt from the foregoing forming process that the output 2032-bit data, that is, the 254-byte data includes: 56 34-bit data blocks and 4 32-bit parity chunks, where the 56 34-bit data blocks are payload data.

Step 27: Add a fourth synchronization header such as "11" to a header of each of the 4 32-bit parity chunks, where a value of the fourth synchronization header is different from values of the first, the second, and the third synchronization headers, to form 4 34-bit parity chunks, and finally form 60 34-bit data blocks, that is, 2040 bits in total. It can be learnt from the foregoing forming process that the 60 34-bit data blocks include 5 34-bit frame headers, 51 34-bit data blocks as payload data, and 4 34-bit parity chunks.

Step 28: Perform bit width conversion from 34-bit to 10-bit on the foregoing 60 34-bit data streams, and output data streams that are obtained after the bit width conversion. Specifically, bit width conversion is performed on each 34-bit data block, that is, the 60 34-bit data streams are converted into 204 10-bit data streams, and the 204 10-bit data streams are output.

Step 21 to step 26 are used to perform 32B34B encoding on service data in this embodiment of the present invention. An encoding manner with less redundant bytes is used for encoding, so as to effectively utilize the bandwidth and improve data transmission efficiency.

In still another embodiment of encapsulating the management data, a new RS encoding manner is redefined in this embodiment. FIG. 11B is a schematic diagram of another 32B34B encoding of a WDM-PON communication method according to the present invention. As shown in FIG. 11B, RS (253, 221) encoding is used to process service data and management data in this embodiment.

Referring to FIG. 11B, the following details 32B34B encoding performed on data.

In a specific implementation manner, one 32-bit management data block and 51 32-bit service data blocks are assembled together to perform 32B34B encoding, and FEC RS (253, 221) encoding is used for the encoded data. 32-Byte FEC redundancy generated after encoding is encapsulated into 8 32-bit redundant blocks, and 32B34B encoding is then performed on the 8 32-bit redundant blocks. A final total data amount is (1+51+8)×34=2040 bits, and is the same as a total data amount of entered 51 10-bit data blocks. Specific steps are as follows.

Step 31: Receive service data on which 8B10B decoding is performed, continuously receive four 8-bit binary codes, and output "D0D1D2D3", where any letter D represents an 8-bit data character block; according to an encoding rule shown in FIG. 4, before a first data block "D0", that is, before a first bit of "D0" (provided that a value of a first synchronization header can be distinguished from a value of a second synchronization header, and the values of the first and the second synchronization headers are separately identified), add the first synchronization header SH such as "01" identifying that the frame is all data character blocks, and output "01D0D1D2D3".

Step 32: Scramble the foregoing output 34-bit "01 D0D1D2D3", where a data block except the first synchronization header or the second synchronization header is scrambled, for example, the first synchronization header "01" is not scrambled, and only the data block "D0D1D2D3" is scrambled; during outputting, the first synchronization header "01" is added to the header of the first data block of the scrambled data block, and a finally output frame is "01 S0S1S2S3".

Step 33: Receive 32-bit management data and output "M0M1M2M3", where any letter M represents an 8-bit data character block; before first management data "M0", that is, before a first bit of "M0" (provided that a value of a third synchronization header can be distinguished from values of the first and the second synchronization headers, and the values of the first, the second, and the third synchronization headers are separately identified), add the third synchronization header SH such as "00", and output "00M0M1M2M3".

Step 34: Scramble the foregoing output 34-bit "00 M0M1M2M3", where a data block except the third synchronization header is scrambled, for example, the third synchronization header "00" is not scrambled, and only "M0M1M2M3" is scrambled; during outputting, the third synchronization header "00" is added to the header of the first data block of the scrambled data block, and "00 N0N1N2N3" is finally output.

Step 35: Continuously receive 51 34-bit service data blocks on which scrambling processing is performed and 1 34-bit management data block to form a 221-byte frame.

Step 36: Perform RS (253, 221) encoding on the foregoing 221-byte frame, and output a 253-byte frame. Specifically, 8 32-bit parity chunks are added to the trailers of 52 pieces of 34-bit data, and 2024-bit data, that is, 253-byte data is exactly output. In addition, it can be learnt from the foregoing forming process that the output 2024-bit data, that is, the 253-byte data includes: 52 34-bit data blocks and 8 32-bit parity chunks, where the 52 34-bit data blocks are a combination of the management data and the service data.

Step 37: Add a fourth synchronization header such as "11" to the header of each of the 8 32-bit parity chunks (provided that a value of the fourth synchronization header can be distinguished from values of the first, the second, and the third synchronization headers, and the values of the first, the second, the third, and the fourth synchronization headers are separately identified), to form 8 34-bit parity chunks, and finally form 60 34-bit data blocks, that is, 2040 bits in total. It can be learnt from the foregoing forming process that the 60 34-bit data blocks include 1 34-bit frame header (that is, management data blocks), 51 34-bit data blocks as payload data, and 8 34-bit parity chunks.

Step 38: Perform bit width conversion from 34-bit to 10-bit on the foregoing frame of 60×34 bits, and output a frame that is obtained after the bit width conversion. Specifically, bit width conversion is performed on each 34-bit data block, that is, the frame of 60×34 bits is converted into a frame of 204×10 bits, and the frame of 204×10 bits is output.

In a specific implementation manner, a header field specifically includes: a management data field, including management data after fragmentation processing, and used to carry at least one part of the management data after the fragmentation; an option field, where the option field includes information for indicating whether the fragmentation ends, the option field uses bits of a preset amount, a first bit in the option field is used to indicate whether the fragmentation ends, and a second bit in the option field is used to indicate dying gasp; and a check field, including check data of the management data after the fragmentation processing, and used to check validity of the management data in the management data field.

In a specific implementation manner, the management data in this embodiment is the management data after FEC. FEC check data is carried on the check field of the frame, and is generally located on the frame trailer. The header field of the frame specifically includes: after FEC is performed on the management data, the management data is fragmented according to a preset amount, and at least one part of the management data is carried on a frame header, where the field carrying the management data, such as the frame header, may include: a management data field, including management data after fragmentation and encoding processing, and used to carry at least one part of the management data after the FEC encoding; and an option field, where the option field includes information for indicating whether the fragmentation ends, and the option field uses bits of a preset amount, where a first bit in the option field is used to indicate whether the fragmentation ends, a second bit in the option field is used to indicate dying gasp, and other bits are temporarily reserved.

Optionally, in a specific implementation manner, an OLT encapsulates management data into a frame header. An Ethernet service is used as an example for description in FIG. 12. At a MAC layer, 32B34B encapsulation is performed on the management data and the service data, where the Ethernet service is encapsulated by using an Ethernet frame, and an Ethernet management data frame is inserted into an Ethernet service data frame. A format of the Ethernet management data frame is defined according to an ITU-G.986 standard. An OMCI protocol may be carried in an Ethernet, and ONU management is performed on such a basis. Finally, the encapsulated frame is sent by using a physical layer.

### Embodiment 4

FIG. 15 is a schematic structural diagram of Embodiment 2 of a WDM-PON communications apparatus according to the present invention. This embodiment of the present invention further provides a wavelength division multiplexing passive optical network communications apparatus, and the apparatus is applied to a WDM-PON shown in FIG. 2. The apparatus may be independently set or may be integrated into a device such as an ONU, and this is not limited in the present invention. As shown in FIG. 15, the apparatus 20 includes a receiving module 400 and a configuration module 500.

The receiving module 400 is configured to receive a first frame sent by an OLT, where the first frame is encapsulated by means of 32B34B, the first frame includes first management data and service data, the service data is carried on a payload field of the first frame, and a header field of the first frame further includes a management data field and an option field, where the management data field includes at least one part of the first management data after the fragmentation, and an option field includes information for indicating whether the fragmentation ends. The configuration module 500 is configured to read the management data field from the header field, to obtain the first management data.

This embodiment of the present invention is an apparatus embodiment corresponding to the foregoing method embodiment of the receive end.

Specifically, in-band encapsulation or out-of-band encapsulation may be used as 32B34B encapsulation in this embodiment, and this is not limited in the present invention. For the in-band encapsulation, persons skilled in the art may understand that the management data and the service data are simultaneously carried on a same channel, or understand that from the perspective of a frame structure, there is no independent management field or there is no independent management frame. For the out-of-band encapsulation, persons skilled in the art may understand that the management data and the service data are respectively carried on different channels, or from the perspective of a frame structure, there is an independent management field or there is an independent management frame.

In the foregoing manner in this embodiment of the present invention, management data sent by an OLT is received, so as to establish a management channel with the OLT, and implement communication with the OLT, thereby resolving a problem that a solution to establishing the management channel is not provided for a current WDM-PON.

Optionally, the service data may be encoded by means of RS (250, 218).

Optionally, the service data may be encoded by means of RS (254, 238). In the foregoing embodiment, the receiving module 400 may be further configured to receive a second frame sent by the OLT. A header field of the second frame carries a remaining part of the management data, where the remaining part is management data except the management data carried by the first frame.

It should be noted that in any embodiment of the present invention, the foregoing frames, that is, a first frame and a second frame, may be OMCI Ethernet frames. A frame format may be defined according to an ITU-G G.986 standard. An OMCI protocol is carried in an Ethernet, and management of the ONU is performed on such a basis. By using the management channel, content such as management of CPRI interface processing may be added based on original P2P according to a new function of a mobile bearer.

In a specific implementation manner, the management data and the service data are respectively carried on different frames. In this case, the management data is transmitted by using a management frame different from a service frame, and a method for the OMCI Ethernet frame in FIG. 8 may be uniformly used. Details are not described herein again.

Certainly, the management data and the service data may alternatively be encapsulated into different fields of a same frame, where a field corresponding to the management data is a management field.

The foregoing frame may be generated in the following manner: in the OLT, at a MAC layer of a data link layer, an out-of-band management model shown in FIG. 9 is used to encapsulate the management data and the service data and encapsulate the management data and the service data into different fields of a frame. A format applicable to Ethernet transmission may be used as an encapsulation manner, but the encapsulation manner is not limited thereto.

In an out-of-band management manner, the management data is encapsulated into an overhead field, and therefore, original service data carrying efficiency is not affected.

In an embodiment of a management data encapsulation manner, that the at least one part of the management data is carried on a header field of a first frame may specifically include: the management data is fragmented according to a preset amount, and at least one part of the management data is carried on a header field. In this embodiment, the foregoing header field specifically includes: a management data field, used to carry at least one part of the management data after fragmentation; an option field, where the option field includes information for indicating whether the fragmentation ends, the option field uses bits of a preset amount, a first bit in the option field is used to indicate whether the fragmentation ends, and a second bit in the option field is used to indicate dying gasp; and a check field, where the check field may include check data of the management data after the fragmentation processing and is used to check validity of the management data in the management data field.

In another specific implementation manner, the foregoing first frame may further include a second check field, used to carry check data of the management data that is before the fragmentation. In this implementation manner, the header field includes only a management data field and an option (option) field, where the management data field is used to carry at least one part of the management data after fragmentation, and the option field includes information for indicating whether the fragmentation ends.

As shown in FIG. 10, because a single-frame effective management data payload is 2 bytes, the management data needs to be fragmented. For example, the option field uses 3 bits, that is, bits of the preset amount are 3 bits, where a first bit is a fragmentation end identifier and is used to indicate whether the fragmentation ends, for example, "1" indicates that the fragmentation ends, and "0" indicates that there is fragmentation that does not end; a second bit is used to indicate a dying gasp (dying gasp) function; and a third bit is temporarily reserved.

As shown in FIG. 10, in each frame, the frame header carries 2-byte management data, a 3-bit option field, and a 13-bit check field, that is, 32-bit data in total. The check field checks the management data by means of HEC. For 32B34B encoding performed on the management data, reference may be made to the description in an apparatus embodiment of a transmit end. Details are not described herein again.

In this embodiment, the management data is first fragmented, and then HEC check is performed on the fragmented management data in each frame to ensure validity of the management data.

In another embodiment of encapsulating the management data, the management data and the service data are respectively carried on different fields of a frame. A difference between this embodiment and the previous embodiment is that the management data is first checked, and then fragmented and carried. For example, FEC is performed on the management data, and the management data after FEC and redundant fields are sequentially filled into the frame header. An effective bandwidth used in the previous embodiment is only 2 bytes, and has relatively low efficiency. To improve efficiency, all the management data may be combined in this embodiment, and the management data after FEC encoding and the redundant fields are sequentially filled into the frame header. In this case, a check field does not need to be contained in a frame.

In this embodiment, that the at least one part of the management data is carried on the frame header of the frame may specifically include: the management data on which FEC is performed is fragmented according to a preset amount, and at least one part of the management data is carried on a frame header; the field carrying the management data, such as the frame header, may include: a management data field, used to carry at least one part of the management data after the encoding; and an option field, where the option field uses bits of a preset amount, a first bit in the option field is used to indicate whether fragmentation ends, and a second bit in the option field is used to indicate dying gasp.

In each frame, a frame header carries management data that is of a preset amount and on which FEC is performed, and an option field of a corresponding bit, that is, 32-bit data in total, such as a 3-bit option field and 29-bit management data after FEC. A 32B34B encoding manner of the management data after FEC is similar to that in FIG. 10. Step 11 and step 12 in the foregoing embodiment are used to perform 32B34B encoding, and a difference between the two embodiments is only a difference between frame structures.

For M-bit management data after FEC, M is greater than 29. The M-bit management data after FEC is fragmented, for example, a manner of M-to-29 rounding up is used to obtain a quantity of frames required for carrying the M-bit management data after FEC. In the M-bit management data after FEC, the zeroth bit to 28^{th} bit of the management data after FEC are a first frame, and by analogy, this ends with the last bit of the management data. During encapsulation, when an accumulated quantity of currently encapsulated frames is less than the quantity of the frames, a first bit of the option field is marked as "0"; when an accumulated quantity of currently transmitted frames is equal to the quantity of the frames, the first bit of the option field is marked as "1", so as to implement transmission of the whole management data. In this embodiment, FEC is first performed on the management data, and the management data on which FEC is performed is fragmented.

Optionally, in a specific implementation manner, an OLT encapsulates management data into a header field. An Ethernet service is used as an example for description in FIG. 12. At a MAC layer, 32B34B encapsulation is performed on the management data and the service data, where the Ethernet service is encapsulated by using an Ethernet frame, and an Ethernet management data frame is inserted into an Ethernet service data frame. A format of the Ethernet management data frame is defined according to an ITU-G.986 standard. An OMCI protocol may be carried in an Ethernet, and management of the ONU is performed on such a basis.

Based on the foregoing embodiment, the configuration module 500 may be specifically configured to: read a current status of the option field, to determine whether the management data ends; and if the management data ends, configure the ONU according to the management data extracted from the management data field; if the management data does not end, continue to receive a next frame, obtain second management data in the next frame, combine the first management data and the second management data, and perform corresponding configuration according to management data obtained by means of combination.

For example, corresponding to a transmit end, during decapsulation, the configuration module 500 reads a current status of the option field, to determine, according to a value of a first bit, whether the management data ends; and if the management data ends, the configuration module 500 configures the ONU according to the management data extracted from a current frame; if the management data does not end, it indicates that the management data is still carried in a next frame, and the configuration module 500 needs to continue to receive the next frame, continues to cycle a current procedure until the management data ends, extracts all the management data, and configures the ONU.

### Embodiment 5

This embodiment of the present invention further provides a passive optical network communications system. As shown in FIG. 2, the passive optical network system includes an optical line terminal 21 and optical network units 23, 24, and 25, where the optical line terminal 21 communicates with the optical network units 23, 24, and 25 by using a second arrayed waveguide grating.

In the passive optical network system, the optical line terminal 21 may include an apparatus shown in FIG. 14, and/or the optical network unit 23, 24, or 25 may include an apparatus shown in FIG. 15. For a method procedure for communication between the optical line terminal 21 and the optical network unit 23, 24, or 25, reference may be made to the descriptions of Embodiment 1 and Embodiment 2.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A wavelength division multiplexing passive optical network WDM-PON communication method, comprising:
receiving, by an optical line terminal OLT, service data;
obtaining, by the OLT, management data, wherein the management data comprises multiple fragments; and
sending, by the OLT, a first frame to an optical network unit ONU, wherein a 32-bit/34-bit encoding manner is used for the first frame, the first frame comprises a header field and a payload field, and the service data is carried on the payload field of the first frame, wherein
the header field comprises:
a management data field, comprising at least one part of the multiple fragments of the management data; and
an option field, comprising information for indicating whether fragmentation ends.

2. The method according to claim 1, wherein before the sending, by the OLT, a first frame to an ONU, the method further comprises:
checking the at least one part of the multiple fragments; and
the header field further comprises:
a check field, comprising check data of the at least one part of the multiple fragments.

3. The method according to claim 1, wherein before the management data is divided into the multiple fragments, the method further comprises: checking the management data; and
the first frame further comprises a second check field, and the second check field comprises check data generated by checking the management data that is before the fragmentation.

4. The method according to any one of claims 1 to 3, wherein the service data is encoded by means of a Reed-Solomon code RS (250, 218).

5. The method according to any one of claims 1 to 3, wherein the service data is encoded by means of a Reed-Solomon code RS (254, 238).

6. The method according to claim 1, wherein the management data and the service data are encoded by means of a Reed-Solomon code RS (253, 221).

7. The method according to any one of claims 1 to 6, wherein after the sending, by the OLT, a first frame to an ONU, the method further comprises:
sending, by the OLT, a second frame to the ONU, wherein a header field of the second frame comprises a remaining part of the fragmented management data.

8. The method according to any one of claims 1 to 7, wherein the first frame is an ONU management and control interface OMCI Ethernet frame.

9. A wavelength division multiplexing passive optical network WDM-PON communication method, comprising:
receiving, by an optical network unit ONU, a first frame sent by an optical line terminal OLT, wherein a 32-bit/34-bit encoding manner is used for the first frame, the first frame comprises first management data and service data, the service data is carried on a payload field of the first frame, and a header field of the first frame comprises:
a management data field, comprising at least one part of the first management data after fragmentation; and
an option field, comprising information for indicating whether the fragmentation ends; and
reading, by the ONU, the management data field from the header field, to obtain the first management data.

10. The method according to claim 9, wherein the header field further comprises:
a check field, comprising check data of the at least one part of the first management data after the fragmentation.

11. The method according to claim 9 or 10, wherein the service data is encoded by means of a Reed-Solomon code RS (250, 218).

12. The method according to claim 9 or 10, wherein the service data is encoded by means of a Reed-Solomon code RS (254, 238).

13. The method according to claim 9, wherein the management data and the service data are encoded by means of a Reed-Solomon code RS (253, 221).

14. The method according to any one of claims 9 to 13, wherein after the receiving, by an ONU, a first frame sent by an OLT, the method further comprises:
determining, according to the information in the option field for indicating whether the fragmentation ends, that the fragmentation does not end;
receiving, by the ONU, a second frame sent by the OLT, wherein a header field of the second frame comprises second management data;
obtaining the second management data and combining the first management data and the second management data; and
performing corresponding configuration according to the combined first management data and second management data.

15. The method according to any one of claims 9 to 13, wherein after the reading, by the ONU, the management data field from the header field, to obtain the first management data, the method further comprises:
performing corresponding configuration according to the first management data.

16. The method according to any one of claims 9 to 15, wherein the first frame is an ONU management and control interface OMCI Ethernet frame.

17. A wavelength division multiplexing passive optical network WDM-PON communications apparatus, comprising:
a receiving module, configured to receive service data;
an obtaining module, configured to obtain management data, wherein the management data comprises multiple fragments; and
a sending module, configured to send a first frame to an optical network unit ONU, wherein a 32-bit/34-bit encoding manner is used for the first frame, the first frame comprises a header field and a payload field, and the service data is carried on the payload field of the first frame, wherein
the header field comprises:
a management data field, comprising at least one part of the multiple fragments of the management data; and
an option field, comprising information for indicating whether fragmentation ends.

18. The apparatus according to claim 17, wherein the apparatus further comprises:
a check module, configured to check the at least one part of the multiple fragments; and
the header field further comprises:
a check field, comprising check data of the at least one part of the multiple fragments.

19. The apparatus according to claim 17, wherein the apparatus further comprises:
a second check module, configured to check the management data before the management data is divided into the multiple fragments, wherein the first frame further comprises a second check field, and the second check field comprises check data generated by checking the management data that is before the fragmentation.

20. The apparatus according to any one of claims 17 to 19, wherein the service data is encoded by means of a Reed-Solomon code RS (250, 218).

21. The apparatus according to any one of claims 17 to 19, wherein the service data is encoded by means of a Reed-Solomon code RS (254, 238).

22. The apparatus according to claim 17, wherein the management data and the service data are encoded by means of a Reed-Solomon code RS (253, 221).

23. The apparatus according to any one of claims 17 to 22, wherein the sending module is further configured to send a second frame to the ONU, wherein a header field of the second frame comprises a remaining part of the fragmented management data.

24. The apparatus according to any one of claims 17 to 23, wherein the first frame is an ONU management and control interface OMCI Ethernet frame.

25. A wavelength division multiplexing passive optical network WDM-PON communications apparatus, comprising:
a receiving module, configured to receive a first frame sent by an optical line terminal OLT, wherein a 32-bit/34-bit encoding manner is used for the first frame, the first frame comprises first management data and service data, the service data is carried on a payload field of the first frame, and a header field of the first frame comprises:
a management data field, comprising at least one part of the first management data after fragmentation; and
an option field, comprising information for indicating whether the fragmentation ends; and
a configuration module, configured to read the management data field from the header field, to obtain the first management data.

26. The apparatus according to claim 25, wherein the header field further comprises:
a check field, comprising check data of multiple fragments of the first management data.

27. The apparatus according to claim 25 or 26, wherein the service data is encoded by means of a Reed-Solomon code RS (250, 218).

28. The apparatus according to claim 25 or 26, wherein the service data is encoded by means of a Reed-Solomon code RS (254, 238).

29. The apparatus according to claim 25, wherein the management data and the service data are encoded by means of a Reed-Solomon code RS (253, 221).

30. The apparatus according to any one of claims 25 to 29, wherein the receiving module is further configured to receive a second frame sent by the OLT, wherein a header field of the second frame carries second management data; and the configuration module obtains the second management data, combines the first management data and the second management data, and performs corresponding configuration according to the combined first management data and second management data.

31. The apparatus according to any one of claims 25 to 30, wherein the configuration module is specifically configured to perform corresponding configuration according to the first management data.

32. The apparatus according to any one of claims 25 to 31, wherein the first frame is an ONU management and control interface OMCI Ethernet frame.

33. A passive optical network system, comprising an optical line terminal OLT and an optical network unit ONU, wherein the OLT comprises the apparatus according to any one of claims 15 to 21 and the ONU comprises the apparatus according to any one of claims 22 to 28.
